# EUROPEAN PATENT SPECIFICATION

(11) **EP 3 828 452 B1**
(45) Date of publication and mention of the grant of the patent: **29.03.2023**
(21) Application number: 19840786.8
(22) Date of filing: 23.05.2019
(51) Int. Cl.: F16K 31/04, F16K 31/50

(54) **METHOD FOR ASSEMBLING MOTORIZED VALVE, AND MOTORIZED VALVE**
VERFAHREN ZUM ZUSAMMENBAU EINES MOTORISIERTEN VENTILS UND MOTORISIERTES VENTIL
PROCÉDÉ D'ASSEMBLAGE D'UNE VANNE MOTORISÉE, ET VANNE MOTORISÉE

(30) Priority: 23.07.2018 JP 2018137505
(43) Date of publication of application: 02.06.2021
(73) Proprietor: Fujikoki Corporation, Tokyo 158-0082 (JP)
(72) Inventor: YOSHIDA Tatsuya, Tokyo 158-0082 (JP); YAZAWA Masashi, Tokyo 158-0082 (JP); KIUCHI Tomokazu, Tokyo 158-0082 (JP); YATAGAI Hiroomi, Tokyo 158-0082 (JP)
(74) Representative: Ter Meer Steinmeister & Partner
(86) International application number: PCT/JP2019/020376
(87) International publication number: WO 2020/021836

(56) References cited:
- JP-A- 2016 217 451
- JP-A- 2017 044 286
- JP-A- 2018 025 308
- JP-A- 2018 105 387
- JP-B2- 5 697 909

## Description

### Technical Field

The present invention relates to a method for assembling a motor-operated valve that is used by being incorporated as a flow rate control valve or the like into the refrigeration cycle of an air conditioner, a refrigerator, or the like.

### Background Art

As a motor-operated valve of this type, for example, there is conventionally known a motor-operated valve that includes a valve stem having a valve element at its lower end; a guide bush in which the valve stem is adapted to be inserted in a relatively movable and relatively rotatable manner in the axis direction; a valve body having the guide bush press-fit fixed thereto and having a valve seat, the valve element being adapted to move into contact with or away from the valve seat; a valve stem holder that is tubular in shape and has a ceiling portion, the valve stem holder being arranged on the outer periphery side of the guide bush and externally arranged around the valve stem in a relatively movable and relatively rotatable manner in the axis direction; a coil spring provided in a compressed state between the valve stem and the valve stem holder so as to urge the valve element in the direction to close the valve; a fixture fixed to the upper portion of the valve stem and arranged opposite and in contact with the valve stem holder so as to substantially securely couple the valve stem and the valve stem holder together in cooperation with the coil spring; a can hermetically joined to the valve body; a stepping motor including a rotor and a stator to rotate the valve stem holder with respect to the guide bush, the rotor being externally arranged around and fixed to the valve stem holder, the stator being externally fitted to and fixed to the can; a thread feeding mechanism including a fixed threaded portion and a movable threaded portion to elevate or lower the valve element with respect to the valve seat, the fixed threaded portion being formed on the outer periphery of the guide bush, the movable threaded portion being formed on the inner periphery of the valve stem holder; and a stopper mechanism including a fixed stopper and a movable stopper to regulate the rotational lowering of the valve stem holder, the fixed stopper being provided on a bottom stopper base body having an internal threaded portion adapted to be screwed onto the fixed threaded portion of the guide bush, the movable stopper being provided on the valve stem holder (For example, see Patent Literatures 1 and 2).

Patent Literature 1 discloses a motor-operated valve according to the preamble of claim 1.

Motor-operated valves with such a configuration are broadly divided into a closed type and a non-closed type. A valve that is widely used as a motor-operated valve of a closed type is adapted to, even after a valve element has been seated on a valve seat, continuously lower (i.e., continuously press) the valve element and press the valve element against the valve seat with a predetermined pressure until a movable stopper collides with a fixed stopper, that is, until a coil spring provided in a compressed state between a valve stem and a valve stem holder is compressed by a predetermined amount (hereinafter referred to as a pressure-closed type).

Meanwhile, in a motor-operated valve of a non-closed type, a movable stopper is caused to collide with a fixed stopper in a state in which a valve element is open to a small degree before being seated on a valve seat so as to avoid a fully-closed position. That is, when the valve element is at the lowest position, a gap of a predetermined size is formed between the valve element and the valve seat so that a refrigerant is flowed through the gap between the slightly open valve element and the valve seat.

In each of the aforementioned motor-operated valves of a pressure-closed type and a non-closed type, the position where the movable stopper collides with the fixed stopper (i.e., the position of the base point for control = 0 pls position) is important. In the motor-operated valve of a pressure-closed type, the position of the base point corresponds to the position where the valve stem holder is at the lowest position, and the compressed amount of the coil spring (i.e., a compression coil spring) provided in a compressed state between the valve stem and the valve stem holder is determined by the position of the base point. Meanwhile, in the motor-operated valve of a non-closed type, the position of the base point corresponds to the position where the valve element is at the lowest position, and the size of the gap between the valve element and the valve seat (i.e., the lift amount = the valve opening degree) is determined by the position of the base point. In the motor-operated valve of each of such types, if the position of the base point is inaccurate, the flow rate control accuracy would decrease, which can result in undesired valve leakage, operation failures, and the like.

Meanwhile, a rotor used for each of the motor-operated valves of a pressure-closed type and a non-closed type is magnetized with bonded magnets, for example, to have alternately different magnetic poles arranged in the circumferential direction (i.e., to have a predetermined number of magnetic poles (for example, 24 magnetic poles) including S-poles and N-poles alternately arranged in the entire circumference of the rotor).

In addition, a stator has upper and lower stator coils in two phases (i.e., A-phase and B-phase), for example, and each stator coil includes a pair of upper and lower yokes, a bobbin attached to the yoke, a coil wound on the bobbin, and the like.

The inner periphery side of each yoke is provided with a predetermined number of (for example, 24) magnetic pole teeth each having an elongated nail shape or an isosceles triangle shape and being alternately arranged in opposite directions at predetermined angular intervals.

In the motor-operated valve having a stopper mechanism as described above, alignment of the magnetic poles is desirably performed in advance so that an excitation magnetic pole (for example, an N-pole) of the stator coil is arranged directly opposite (i.e., facing the front of) a predetermined magnetic pole (for example, an S-pole) of the rotor when the movable stopper collides with the fixed stopper so as to suppress positional deviation of the rotor in the rotation direction (i.e., the circumferential direction) upon collision between the two stoppers (during initialization, for example) and suppress generation of vibration and noise.

To respond to such demand, Patent Literature 2 discloses a method for assembling a motor-operated valve that includes, in addition to setting (or managing) the threading start position of the internal threaded portion of the bottom stopper base body and the threading start position of the movable threaded portion (i.e., the internal threaded portion) of the valve stem holder to specific positions, providing a mark (i.e., a D-cut surface or a cutout) for setting (or managing) the press-fit direction (or the orientation) of the guide bush, and setting (or managing) the threading start position of the fixed threaded portion (i.e., the external threaded portion) of the guide bush to a specific position as seen in a top view using the mark, thereby providing a constant correlation between the position of the guide bush in the rotation direction and the positions of the magnetic pole teeth of the stator, so that alignment of the magnetic poles is appropriately performed such that when the movable stopper collides with the fixed stopper, an excitation magnetic pole (for example, an N-pole) of the stator coil and a predetermined magnetic pole (for example, an S-pole) of the rotor are arranged exactly directly opposite each other.

### Citation List

### Patent Literature

Patent Literature 1: JP 2016-217451 A
Patent Literature 2: JP 5697909 B

### Summary of Invention

### Technical Problem

In the method for assembling the conventional motor-operated valve described in Patent Literature 2, as described above, a mark (i.e., a D-cut surface or a cutout) for setting (or managing) the press-fit direction (or the orientation) of the guide bush is required, and also, it is necessary to strictly manage the threading start position of each threaded portion and the like. Thus, there has been a problem that the machining cost, assembly cost, and the like are increased.

In addition, in the method for assembling the conventional motor-operated valve, as described in Patent Literatures 1 and 2, the bottom stopper base body is fixed to the immobile portion on the side of the valve body after the fixture is fixed to the valve stem. Thus, it has been difficult to accurately perform the alignment of the magnetic poles and the base point determination at the same time, and there has been a concern that if the magnetic poles are accurately aligned, the base point determination may become inaccurate, and conversely, if the base point determination is accurately performed, the alignment of the magnetic poles may become inaccurate.

The present invention has been made in view of the foregoing problems, and it is an object of the present invention to provide a method for assembling a motor-operated valve according to any of claims 1, 2 that allows an excitation magnetic pole of a stator coil and a predetermined magnetic pole of a rotor to be arranged exactly directly opposite each other when the movable stopper collides with the fixed stopper and thus stops, and can accurately perform both the alignment of the magnetic poles and the base point determination without requiring strict dimension management of the guide bush, and the like, and thus can increase the flow rate control accuracy and the like while reducing the parts machining cost, assembly cost, and the like, and can also suppress positional deviation of the rotor in the circumferential direction during initialization and generation of vibration and noise, and also provide the motor-operated valve.

### Solution to Problem

To achieve the aforementioned object, a method for assembling a motor-operated valve according to the present invention is basically a method for assembling a motor-operated according to any of claims 1, 2, the method including: (a) a step of fixing the guide bush to the valve body without positioning the guide bush in a circumferential direction; (b) a step of screwing the bottom stopper base body onto the guide bush, and rotating the bottom stopper base body so as to adjust a position of a collision-contact plane of the fixed stopper with respect to the movable stopper such that the collision-contact plane is located on a particular straight line passing through an axis of rotation of the rotor or on a straight line that is at a predetermined angular interval from the particular straight line as seen in a top view; (c) a step of fixing the bottom stopper base body with the position adjusted in the step (b) to an immobile portion on a side of the valve body; (d) a step of positioning the rotor with respect to the valve stem holder and attaching the valve stem holder having the urging member and the rotor fixed thereto to the valve stem without the fixture fixed thereto, thereby obtaining an assembly; (e) a step of screwing the valve stem holder of the assembly obtained in the step (d) onto the guide bush to allow the valve element to be seated on the valve seat, and further rotating the valve stem holder in the direction to close the valve to allow the movable stopper to collide with the fixed stopper; (f) a step of rotating the valve stem holder in the direction to close the valve or a direction to open the valve by a predetermined amount based on a screw amount of the valve stem holder with respect to the guide bush when the movable stopper has collided with the fixed stopper in the step (e), thereby moving the valve stem holder to a position where the valve stem holder should be finally located with respect to the valve stem when the movable stopper collides with the fixed stopper; (g) a step of externally fitting the fixture to the valve stem and arranging the fixture so as to be opposite and in contact with the valve stem holder after the step (f), thereby fixing the fixture to the valve stem; and (h) a step of externally fitting the stator to the can and fixing the stator to the can while the stator is positioned in the circumferential direction and a vertical direction.

In the aforementioned assembling method, preferably, provided that the motor-operated valve is of a non-closed type in which when the movable stopper collides with the fixed stopper, the valve element is at a lowest position and a gap of a predetermined size is formed between the valve element and the valve seat, the step (f) includes relatively rotating and lowering the valve stem holder, which has been screwed onto the guide bush by the screw amount, in the direction to close the valve by a rotation angle corresponding to the gap of the predetermined size that should be formed between the valve element and the valve seat, and determining the lowered position of the valve stem holder as a position where the valve stem holder should be finally located with respect to the valve stem.

In the aforementioned assembling method, preferably, provided that the motor-operated valve is of a pressure-closed type in which even after the valve element has been seated on the valve seat, the valve stem holder continues to be lowered until the movable stopper collides with the fixed stopper, the step (f) includes rotating and elevating the valve stem holder, which has been screwed onto the guide bush by the screw amount, in the direction to open the valve by a rotation angle corresponding to an amount of difference that is obtained by subtracting a design value of a length that the urging member should have when the movable stopper collides with the fixed stopper from a design value of a length that the urging member should have when the valve element is seated on the valve seat, and determining the elevated position of the valve stem holder as a position where the valve stem holder should be finally located with respect to the valve stem.

In a preferred aspect, a center line of a conduit joint to serve as a lateral inlet/outlet of the valve body, or an extended line of the center line is used as the particular straight line passing through the axis of rotation of the bottom stopper base body.

In another preferred aspect, positioning of the stator with respect to the can and the valve body in the circumferential direction and the vertical direction is performed using a whirl-stop tool attached to one side of a lower face side of the stator, the whirl-stop tool having a pair of arcuate holding portions adapted to hold the conduit joint to serve as the lateral inlet/outlet of the valve body.

In further another preferred aspect, in the step (c), a stopper presser externally attached to the bottom stopper base body in a relatively unrotatable manner and fixed to the immobile portion on the side of the valve body is used for the step of fixing the bottom stopper base body to the immobile portion on the side of the valve body.

Meanwhile, a motor-operated valve according to the present invention basically includes a valve stem with a valve element; a guide bush in which the valve stem is adapted to be inserted in a relatively movable and relatively rotatable manner in an axis direction; a valve body having the guide bush securely attached thereto and having a valve seat, the valve element being adapted to move into contact with or away from the valve seat; a valve stem holder externally arranged around the valve stem in a relatively movable and relatively rotatable manner in the axis direction; an urging member provided between the valve stem and the valve stem holder so as to urge the valve element in a direction to close the valve; a fixture externally fitted to and fixed to the valve stem and arranged opposite and in contact with the valve stem holder so as to substantially securely couple the valve stem and the valve stem holder together in cooperation with the urging member; a can hermetically joined to the valve body; a stepping motor having a rotor and a stator to rotate the valve stem holder with respect to the guide bush, the rotor being arranged on an inner side of the can and fixed to the valve stem holder, the stator being externally fitted to and fixed to the can; a thread feeding mechanism including a fixed threaded portion and a movable threaded portion to elevate or lower the valve element with respect to the valve seat, the fixed threaded portion being formed on the guide bush, the movable threaded portion being formed on the valve stem holder; and a stopper mechanism including a fixed stopper and a movable stopper to regulate rotational lowering of the valve stem holder, the fixed stopper being provided on a bottom stopper base body having a threaded portion adapted to be screwed onto the fixed threaded portion of the guide bush, the movable stopper being provided on the valve stem holder, in which the rotor is fixed to the valve stem holder while being positioned in a rotation direction and a vertical direction, and the stator is externally fitted to and fixed to the can and the valve body while being positioned in a circumferential direction and the vertical direction, a predetermined magnetic pole of the rotor and a collision-contact plane of the movable stopper with respect to the fixed stopper are located on a straight line passing through an axis of rotation of the rotor, and a collision-contact plane of the fixed stopper with respect to the movable stopper and a predetermined excitation magnetic pole of the stator are located on a particular straight line passing through the axis of rotation or on a straight line that is at a predetermined angular interval from the particular straight line, and the collision-contact planes of the movable stopper and the fixed stopper when the movable stopper collides with the fixed stopper do not coincide with a threading start position of the guide bush as seen in a top view.

In a preferred aspect, the motor-operated valve further includes a stopper presser externally attached to the bottom stopper base body in a relatively unrotatable manner and fixed to an immobile portion on a side of the valve body.

According to the invention, the motor-operated valve further includes a conducting member partially embedded in a resin mold on one side of a lower face side of the stator, the conducting member being adapted to electrically connect a yoke of the stator and the valve body; and a whirl-stop tool securely attached to the stator via the conducting member, the whirl-stop tool having a pair of arcuate holding portions adapted to hold a conduit joint to serve as a lateral inlet/outlet of the valve body.

Also according to the invention, the motor-operated valve further includes a plurality of pedestal portions radially arranged at equal angular intervals on the lower face side of the stator, any one of the pedestal portions being adapted to have the whirl-stop tool securely attached thereto. Advantageous Effects of Invention

In the present invention, at the stage when the rotor is fixed to the valve stem holder, a predetermined magnetic pole (or the center thereof) of the rotor and the collision-contact plane of the movable stopper with respect to the fixed stopper are allowed to be located on a straight line passing through the axis of rotation of the rotor.

In addition, the position of the collision-contact plane of the fixed stopper with respect to the movable stopper is adjusted to be located on a particular straight line passing through the axis of rotation as seen in a top view, for example, on the center line of a conduit joint to serve as a lateral inlet/outlet of the valve body or on a straight line that is at a predetermined angular interval from the center line.

Further, positioning of the stator with respect to the can and the valve body is performed using a whirl-stop tool that is attached to one side of the lower face of the stator, for example, and has a pair of arcuate holding portions adapted to hold the conduit joint to serve as the lateral inlet/outlet of the valve body so that an excitation magnetic pole (or the center thereof) of the stator is adjusted to be located on a particular straight line passing through the axis of rotation as seen in a top view, for example, on the center line of the conduit joint to serve as the lateral inlet/outlet of the valve body or on a straight line that is at a predetermined angular interval from the center line.

Therefore, when the movable stopper collides with the fixed stopper, a predetermined magnetic pole (or the center thereof) of the rotor, the collision-contact plane of the movable stopper with respect to the fixed stopper, the collision-contact plane of the fixed stopper with respect to the movable stopper, and an excitation magnetic pole (or the center thereof) of the stator are located on a particular straight line passing through the axis of rotation or on a straight line that is at a predetermined angular interval from the particular straight line. Thus, the excitation magnetic pole (for example, an N-pole) of the stator and the predetermined magnetic pole (for example, an S-pole) of the rotor are allowed to be arranged exactly directly opposite (i.e., facing) each other, and thus, the alignment of the magnetic poles can be appropriately performed.

In addition, in the present invention, after the bottom stopper base body with the adjusted position of the collision-contact plane of the fixed stopper with respect to the movable stopper is fixed to the immobile portion on the side of the valve body, the position of the fixture with respect to the valve stem is adjusted so that the position of the valve stem holder with respect to the valve stem in the vertical direction upon collision of the movable stopper with the fixed stopper becomes a predetermined position. Thus, base point determination can be accurately performed as well as the aforementioned alignment of the magnetic poles.

When the motor-operated valve is of a non-closed type, upon collision of the movable stopper with the fixed stopper, a gap of a predetermined size can be formed between the valve element and the valve seat, and also, the number of drive pulses that should be supplied to the stator during initialization or the like becomes accurate (i.e., a minimum required number).

Meanwhile, when the motor-operated valve is of a pressure-closed type, upon collision of the movable stopper with the fixed stopper, the length (i.e., the actual length) of the urging member becomes a predetermined length and the valve element can thus be pressed against the valve seat with a predetermined pressure, and also, after the valve element has been seated on the valve seat during initialization, for example, the number of drive pulses that should be supplied to the stator up to the base point position where the movable stopper collides with the fixed stopper and thus stops as well as the number of drive pulses that should be supplied to the stator up to the valve opening point where the valve element is moved away from the valve seat from the base point position, for example, becomes accurate (i.e., a minimum required number).

Therefore, according to the present invention, strict management of the bottom stopper base body, the guide bush, the valve stem holder, and the like is not required, and when the movable stopper collides with the fixed stopper, an excitation magnetic pole of the stator coil and a predetermined magnetic pole of the rotor can be arranged exactly directly opposite each other, and thus, both the alignment of the magnetic poles and the base point determination can be accurately performed. Therefore, it is possible to increase the flow rate control accuracy and the like while reducing the parts machining cost, product assembly cost, and the like, and also suppress positional deviation of the rotor in the circumferential direction and the like during initialization. Consequently, generation of vibration and noise can be effectively suppressed.

### Brief Description of Drawings

Fig. 1 is a longitudinal sectional view of an embodiment of a motor-operated valve (of a non-closed type) according to the present invention.
Fig. 2A is a perspective view of a valve stem holder illustrated in Fig. 1.
Fig. 2B is a top view of the valve stem holder illustrated in Fig. 1.
Fig. 3 is a top view of a rotor illustrated in Fig. 1.
Fig. 4 is a top view of a state in which the rotor illustrated in Fig. 3 is externally arranged around the valve stem holder illustrated in Fig. 2B.
Fig. 5A is a perspective view of a stopper presser illustrated in Fig. 1.
Fig. 5B is a top view of the stopper presser illustrated in Fig. 1.
Fig. 6A is a perspective view of the internal structure of the motor-operated valve illustrated in Fig. 1 (i.e., a state in which a bottom stopper base body and a stopper presser are attached).
Fig. 6B is a top view of Fig. 6A illustrating the internal structure of the motor-operated valve illustrated in Fig. 1 (i.e., a state in which the bottom stopper base body and the stopper presser are attached).
Fig. 7A is a perspective view of a whirl-stop tool illustrated in Fig. 1.
Fig. 7B is a front view of the whirl-stop tool illustrated in Fig. 1.
Fig. 8 is a view used for the illustration of the contact width between collision-contact planes when a movable stopper collides with a fixed stopper.
Fig. 9A is a view used for the illustration of an exemplary method for assembling the motor-operated valve (of a non-closed type) illustrated in Fig. 1, and illustrating a step of adjusting the position of the bottom stopper base body and the like.
Fig. 9B is a view used for the illustration of an exemplary method for assembling the motor-operated valve (of a non-closed type) illustrated in Fig. 1, and illustrating a step of causing the movable stopper to collide with the fixed stopper and the like.
Fig. 10 is a view used for the illustration of an exemplary method for assembling the motor-operated valve (of a non-closed type) illustrated in Fig. 1, in which the left view illustrates a step for determining the base point and the like, and the right view illustrates a state in which the valve element is at the lowest position.
Fig. 11 is a view used for the illustration of the alignment of the magnetic poles of a rotor and a stator.
Fig. 12 is a schematic plan view of the arrangement of the rotor, the stator, the valve stem holder, the movable stopper, the bottom stopper base body, the fixed stopper, and the like.
Fig. 13 is a view used for the illustration (No. 1) of an example of the configuration of another embodiment of a motor-operated valve (of a pressure-closed type) according to the present invention and a method for assembling the same, in which the left view illustrates a step of causing a movable stopper to collide with a fixed stopper and the like and the right view illustrates a step for determining the base point and the like.
Fig. 14 is a view used for the illustration (No. 2) of an example of the configuration of another embodiment of a motor-operated valve (of a pressure-closed type) according to the present invention and a method for assembling the same, in which the left view illustrates a step of externally fitting and fixing a fixture to a valve stem and the like, and the right view illustrates a state in which a valve element is at the lowest position.
Fig. 15A is a perspective view of the rear face side of a motor-operated valve as a product of the present invention used for the illustration of the attachment of a whirl-stop tool.
Fig. 15B is a perspective view of the rear face side of a motor-operated valve as a conventional product used for the illustration of the attachment of a whirl-stop tool.
Figs. 16 are perspective views of four exemplary motor-operated valves with whirl-stop tools attached thereto at different positions.

### Description of Embodiments

Hereinafter, embodiments of the present invention will be described with reference to the drawings.

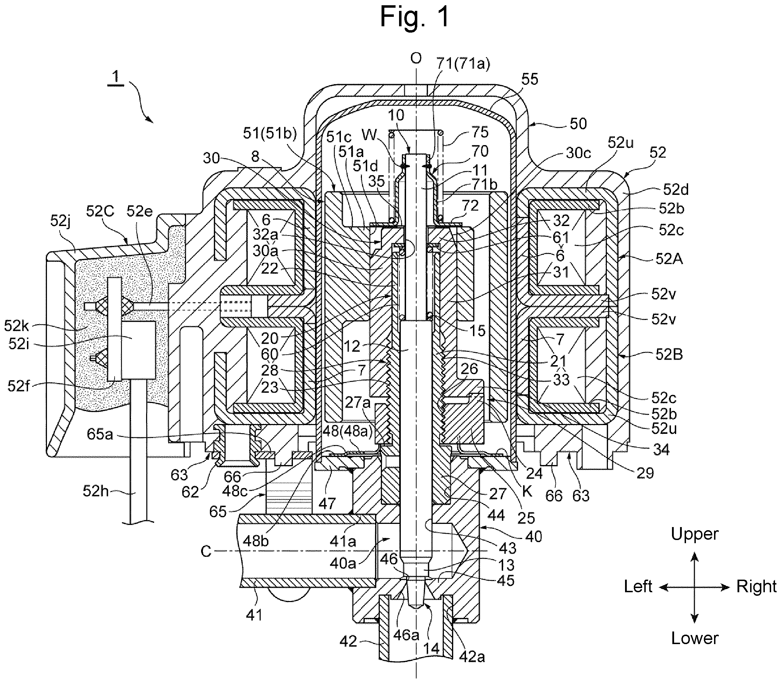

In each drawing, a gap formed between some members, a clearance between some members, and the like may be depicted exaggerated to help understand the invention and also for the sake of convenience to create the drawing. In addition, in the present specification, descriptions indicating the positions or directions, such as upper, lower, top, bottom, left, and right, are based on the indications of the arrow directions in Fig. 1, and do not indicate the positions or directions when the valve is actually used.

### [Configuration of motor-operated valve (of non-closed type)]

Fig. 1 is a longitudinal sectional view of an embodiment of a motor-operated valve according to the present invention.

A motor-operated valve 1 of an embodiment illustrated in Fig. 1 is a non-closed type adapted to be used by being incorporated as a flow rate control valve or the like into the refrigeration cycle of an air conditioner, a refrigerator, or the like, and mainly includes a valve stem 10 having a valve element 14 at its lower end; a guide bush 20; a valve stem holder 30; a valve body 40; a can 55; a stepping motor 50 including a rotor 51 and a stator 52; a coil spring (i.e., an urging member) 60; a fixture 70; a thread feeding mechanism 28; and a stopper mechanism 29.

The valve stem 10 includes an upper small-diameter portion 11, an intermediate large-diameter portion 12, and a lower small-diameter portion 13 arranged in this order from the upper side. The lower end of the lower small-diameter portion 13 is integrally formed with a stepped valve element 14 with an inverted cone shape for controlling the flow rate of a fluid (i.e., refrigerant) to flow through a valve port 46a.

The guide bush 20 includes a cylindrical portion 21 into which the valve stem 10 (or the intermediate large-diameter portion 12 thereof) is adapted to be inserted in a manner relatively movable (or slidable) in the direction along the axis O and in a manner relatively rotatable about the axis O, and an extension portion 22 that extends upward from the upper end of the cylindrical portion 21, has an inside diameter larger than that of the cylindrical portion 21, and into which the upper end side of the intermediate large-diameter portion 12 and the lower end side of the upper small-diameter portion 11 of the valve stem 10 are adapted to be inserted. A fixed threaded portion (i.e., an external threaded portion) 23, which forms one side of the thread feeding mechanism 28 that is adapted to elevate or lower the valve element 14 of the valve stem 10 with respect to a valve seat 46 of the valve body 40 according to the rotational drive of the rotor 51, is formed on the outer periphery of the cylindrical portion 21 of the guide bush 20. The lower portion (i.e., a portion below the fixed threaded portion 23) of the cylindrical portion 21 has a large diameter and serves as a fitted portion 27 adapted to be press-fit fixed into a fitting hole 44 provided in the upper portion of the valve body 40. A bottom stopper base body 25 having an internal threaded portion (i.e., a threaded portion) 26, which is adapted to be screwed onto the fixed threaded portion 23, is screwed onto the fixed threaded portion 23 (i.e., a portion thereof below the valve stem holder 30). A fixed stopper 24 that forms one side of the stopper mechanism 29, which is adapted to regulate the rotational lowering of the valve stem holder 30, is formed in a protruding manner and integrally with the outer periphery of the bottom stopper base body 25. It should be noted that in this example, an upper face 27a of the fitted portion 27 serves as a receiving portion for regulating the lowering of the bottom stopper base body 25 (that is, defining the position of the bottom stopper base body 25 in the seated state of the valve element described below).

In this example, a stopper presser 48 is attached (i.e., externally attached) to the bottom stopper base body 25 screwed onto the guide bush 20 (or the fixed threaded portion 23 thereof). The bottom stopper base body 25 is unrotatably coupled to the guide bush 20 (or the fixed threaded portion 23 thereof) by the stopper presser 48 (as described in detail later).

The valve stem holder 30 is made of resin, for example (preferably, resin reinforced with SUS or carbon fibers with high wear resistance, considering its contact with the fixture 70), and includes a cylindrical portion 31 into which the guide bush 20 is adapted to be inserted, and a ceiling portion 32 with an insertion hole 32a through which the upper end of the valve stem 10 (or the upper small-diameter portion 11 thereof) is adapted to be inserted (in a state relatively movable in the direction of the axis O and relatively rotatable about the axis O). The lower portion of the inner periphery of the cylindrical portion 31 of the valve stem holder 30 has formed therein a movable threaded portion (i.e., an internal threaded portion) 33 that is adapted to be screwed onto the fixed threaded portion 23 of the guide bush 20 and thus forms the thread feeding mechanism 28. The upper portion of the inner periphery of the cylindrical portion 31 is adapted to abut (i.e., be in sliding contact with) the outer periphery of the cylindrical extension portion 22 of the guide bush 20. A movable stopper 34 that forms the other side of the stopper mechanism 29 is formed in a protruding manner and integrally with the lower end of the outer periphery of the cylindrical portion 31.

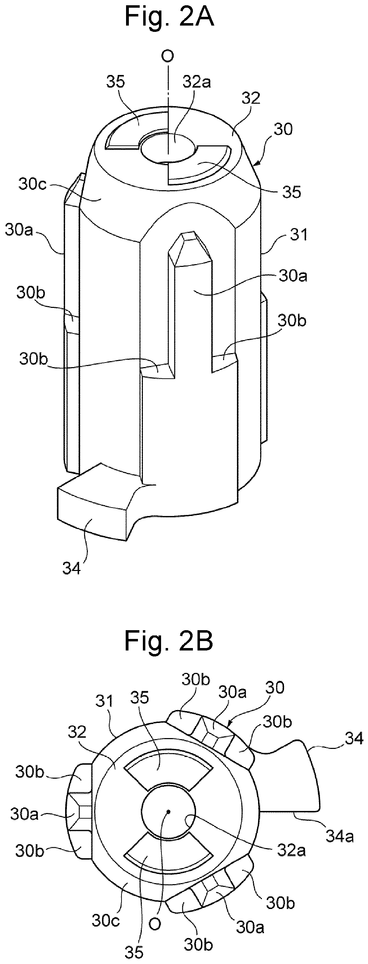

As seen in Figs. 2A and 2B, two projections 35 that are approximately fan-shaped (herein, in the shape of a fan with a central angle of about 90 degrees) are integrally formed with the upper face of the ceiling portion 32 of the valve stem holder 30 (i.e., a face opposite the flange portion 72 of the fixture 70 described below) so as to reduce the rotary-sliding resistance between the valve stem holder 30 and the fixture 70.

A cylindrical coil spring 60, which is adapted to urge the valve stem 10 in the direction away from the valve stem holder 30 in the up-down direction (i.e., the direction of the axis O), that is, to always urge the valve stem 10 (i.e., the valve element 14) downward (i.e., in the direction to close the valve), is provided in a compressed state between a terrace face (i.e., a step portion) 15, which is formed between the upper small-diameter portion 11 and the intermediate large-diameter portion 12 of the valve stem 10, and the lower face of the ceiling portion 32 of the valve stem holder 30 such that the cylindrical coil spring 60 is externally arranged around the upper small-diameter portion 11 of the valve stem 10 with interposed therebetween a disk-shaped pressing plate (i.e., a washer) 61 arranged on the lower face side of the ceiling portion 32 of the valve stem holder 30.

The coil spring 60 is adapted to substantially securely couple the valve stem 10 and the valve stem holder 30 together in cooperation with the fixture 70 described below, and is able to finely adjust the position of the valve stem holder 30 with respect to the valve stem 10 by utilizing the elasticity of the coil spring 60 during assembly of the motor-operated valve 1.

The valve body 40 is a cylindrical body made of metal, such as brass or SUS, for example. The valve body 40 includes a valve chamber 40a into/from which a fluid is introduced/discharged. A first conduit joint 41, which serves as a fluid inlet/outlet, is securely coupled to a first lateral opening 41a provided on the lateral portion of the valve chamber 40a by brazing, for example. The ceiling portion of the valve chamber 40a has formed therein an insertion hole 43 through which the valve stem 10 (or the intermediate large-diameter portion 12 thereof) is adapted to be inserted in a state relatively movable (or slidable) in the direction along the axis O and relatively rotatable about the axis O, and a fitting hole 44 into which the lower portion (i.e., the fitted portion 27) of the guide bush 20 is adapted to be press-fit fixed. A second conduit joint 42, which serves as a fluid inlet/outlet, is securely coupled to a second longitudinal opening 42a provided at the bottom of the valve chamber 40a by brazing, for example. In addition, a bottom wall 45 between the valve chamber 40a and the second opening 42a has formed therein a stepped valve port 46a having a valve seat 46 which the valve element 14 is adapted to be moved into contact with or away from.

The outer periphery of the upper end of the valve body 40 (i.e., the outer side of the valve body 40 opposite to the guide bush 20) has an annular flanged plate 47 fixed thereto by swaging, brazing, or the like. In addition, the lower end of the cylindrical can 55 with a ceiling is hermetically joined to a step portion provided on the outer periphery of the flanged plate 47 by butt welding, for example.

In this example, the upper face (i.e., the surface on the can 55 side) of the flanged plate 47 has securely arranged thereon the stopper presser 48 that is a stepped, approximately plate-like member adapted to engage with the bottom stopper base body 25 and prevent relative rotation of the bottom stopper base body 25 with respect to the guide bush 20.

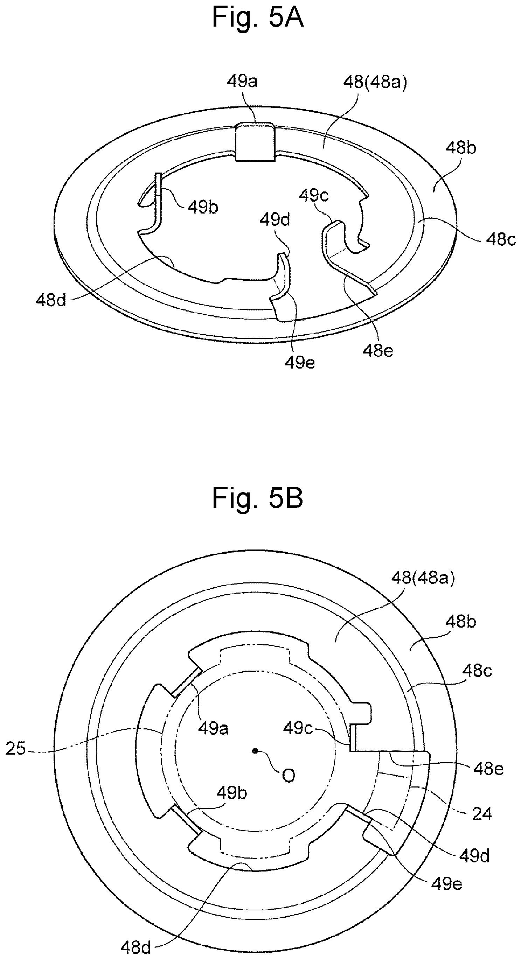

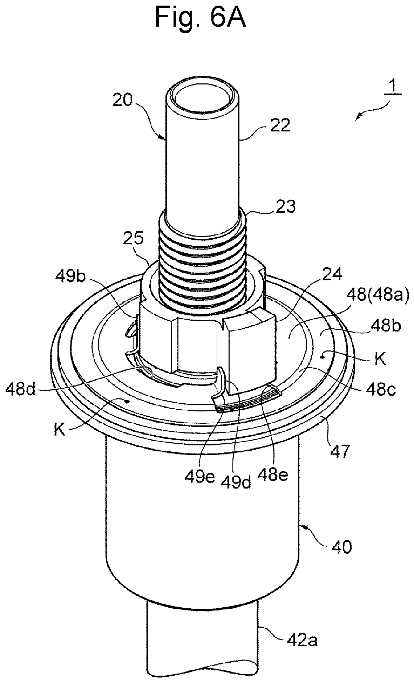

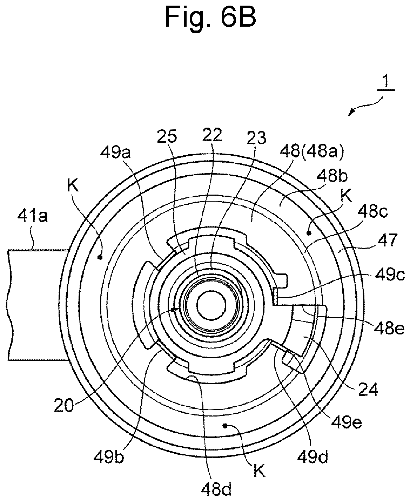

The stopper presser 48 is formed by press work or the like using a metal member, such as brass or SUS, for example. As can be clearly seen in Figs. 5A, 5B, 6A, and 6B in addition to Fig. 1, the stopper presser 48 is basically adapted to engage with the bottom stopper base body 25 in a state separated from (i.e., floating above) the valve body 40 (or the upper face thereof) and the flanged plate 47 (or the upper face thereof) provided on the valve body 40, and the outer periphery portion of the stopper presser 48 (i.e., a portion on the outer side of an annular step portion 48c thereof) is adapted to abut the flanged plate 47 (or the upper face thereof) and is securely joined thereto by welding, adhesion, bonding, or the like.

More specifically, the stopper presser 48 includes a disk-shaped attachment support portion 48a that is attached (i.e., externally attached) to the bottom stopper base body 25 and is arranged apart from the valve body 40 (or the upper face thereof), and an annular attachment fixation portion 48b that is provided on the outer periphery of the attachment support portion 48a with the step portion 48c interposed therebetween and is securely attached to the flanged plate 47 provided on the outer periphery of the valve body 40.

The attachment support portion 48a has formed therein a fit-insertion hole 48d with a size that allows the bottom stopper base body 25 to be inserted therethrough. Three support claws 49a, 49b, and 49c, which are rectangular in shape as seen in a side view and are adapted to hold the bottom stopper base body 25 (or the outer face thereof), are provided in upright position on the attachment support portion 48a, at positions adjacent to the fit-insertion hole 48d (that is, on the outer periphery portion of the fit-insertion hole 48d). The three support claws 49a, 49b, and 49c are provided in upright position so as to be opposite the outer surface of the bottom stopper base body 25, and the support claw 49c, which is relatively small of the three (i.e., has a relatively small width in the circumferential direction and a relatively small height), is arranged adjacent to a fan-shaped portion 48e of the fit-insertion hole 48d in which the fixed stopper 24, which is fan-shaped as seen in a top view, is adapted to be fitted and inserted (specifically, adjacent to the side face of the fixed stopper 24 fitted and inserted in the fan-shaped portion 48e in the direction to open the valve). In addition, a support claw (i.e., a support portion) 49d, which is rectangular in shape as seen in the circumferential direction, is provided in upright position on the outer periphery portion of the fan-shaped portion 48e (specifically, a portion adjacent to the side face of the fixed stopper 24 fitted and inserted in the fan-shaped portion 48e in the direction to close the valve on the side opposite to the side face in the direction to open the valve) so as to be opposite the outer surface of the fixed stopper 24 (i.e., the side face in the direction to close the valve). The support claw 49d holds the opposite side faces of the fixed stopper 24 in the circumferential direction together with the support claw 49c.

In addition, in this example, the lower end (i.e., the proximal portion) of the support claw 49d is provided with a curved portion (also referred to as an R-shaped portion) 49e formed to have a predetermined radius as seen in the radial direction (i.e., the lateral direction). The support claw 49d is elastically deformable in the circumferential direction.

For example, when initialization (i.e., base point determination of the motor-operated valve 1) is performed, the support claw 49d elastically deforms (i.e., warps) in the circumferential direction upon collision of the movable stopper 34 provided on the valve stem holder 30 with the fixed stopper 24 provided on the bottom stopper base body 25, so that the impact (in the circumferential direction) is relaxed. In addition, after the collision, the bottom stopper base body 25 (or the fixed stopper 24 thereof) supported by the support claw 49d is pushed back to its original position or posture with the elastic restoring force of the support claw 49d.

The attachment fixation portion 48b of the stopper presser 48 is securely joined to the approximately central portion of the flanged plate 47 (or the upper face thereof) by welding, adhesion, bonding, or the like (i.e., a joined portion K). Accordingly, the bottom stopper base body 25 is relatively unrotatably coupled to the guide bush 20 (or the fixed threaded portion 23 thereof).

The rotor 51 is rotatably provided on the inner side of the can 55 and on the outer side of the guide bush 20 and the valve stem holder 30, while the stator 52 is externally fitted to and held by the outer periphery of the can 55 so as to rotationally drive the rotor 51.

The stator 52 is formed by molding using thermoplastic resin, and includes stator coils 52A and 52B in two phases (i.e., A-phase and B-phase). The upper stator coil 52A includes a pair of upper and lower yokes 52u and 52v, a bobbin 52b attached to the yokes 52u and 52v, a coil 52c wound on the bobbin 52b, and the like. The lower stator coil 52B has a configuration obtained by inverting the configuration of the upper stator coil 52A upside down, and includes a pair of upper and lower yokes 52u and 52v, a bobbin 52b attached to the yokes 52u and 52v, a coil 52c wound on the bobbin 52b, and the like. Void portions on the outer periphery of and inside the stator coils 52A and 52B are covered with and filled with molding resin (i.e., a resin mold 52d as a resin portion), and thus are sealed.

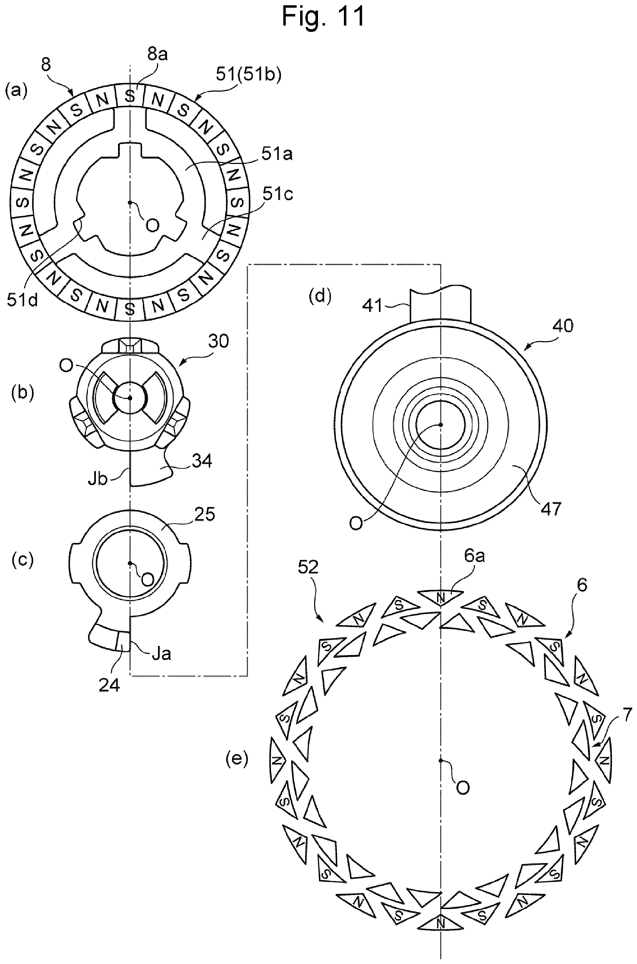

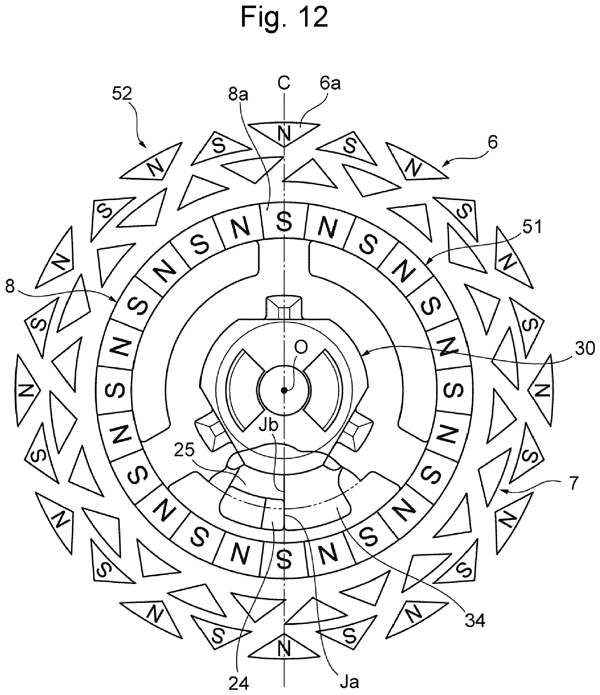

The inner periphery side of each of the pair of upper and lower yokes 52u and 52v (or the stator coils 52A and 52B) is provided with, as schematically illustrated in Figs. 11 and 12, a plurality of (for example, 24) magnetic pole teeth 6 or 7 each having an elongated nail shape or an isosceles triangle shape and being alternately arranged in opposite directions at predetermined angular intervals. In this example, when excitation is performed in A-B-phases, the rotor 51 rotates once with 96 pulses, for example.

A lateral portion of the stator coils 52A and 52B covered with the resin mold 52d is provided with a lead wire connection portion (i.e., a connector portion) 52C. The connector portion 52C is provided with a substrate 52f and a connector 52i for connecting a plurality of coil terminal pins 52e and a plurality of lead wires 52h, and has attached thereto a cover 52j to cover the upper portions of the coil terminal pins 52e, the substrate 52f, the connector 52i, the lead wires 52h, and the like. In addition, the inside of the cover 52j is filled with resin 52k, such as silicone resin, and thus is sealed.

The rotor 51 arranged in the can 55 is externally arranged around and supported by the valve stem holder 30, and the valve stem holder 30 is adapted to rotate together with (or integrally with) the rotor 51.

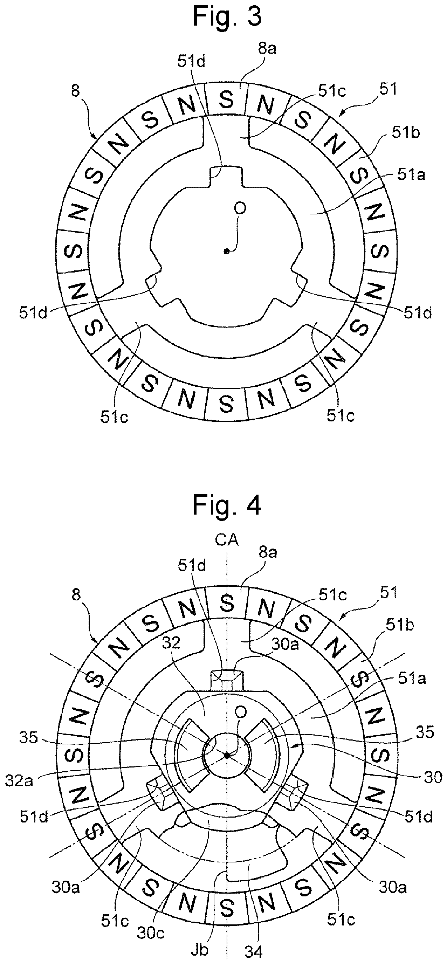

More specifically, the rotor 51 has, as schematically illustrated in the top view of Fig. 3, a double-cylinder structure of an inner cylinder 51a, an outer cylinder 51b, and connection portions 51c for connecting the inner cylinder 51a and the outer cylinder 51b at predetermined angular positions around the axis O. Longitudinal grooves 51d extending in the direction of the axis O (i.e., the vertical direction) are formed on the inner periphery of the inner cylinder 51a (for example, at angular intervals of 120 degrees around the axis O). The outer cylinder 51b of the rotor 51 is molded with bonded magnets, for example, and is magnetized to have alternately different magnetic poles in the circumferential direction (i.e., a magnetized portion 8 with a plurality of magnetic poles 8a) so that 24 magnetic poles including S-poles and N-poles are alternately arranged in the entire circumference of the outer cylinder 51b.

Meanwhile, as clearly seen in Figs. 2A, 2B, and 4, the upper end of the outer periphery (or the upper half thereof) of the valve stem holder 30 is provided with a tapered face portion 30c having a circular truncated cone face. Elongated protrusions 30a extending in the vertical direction are provided below the tapered face portion 30c (for example, at angular intervals of 120 degrees around the axis O), and upward engagement faces 30b adapted to support the rotor 51 are formed on the opposite sides of the lower portion of each elongated protrusion 30a.

As described above, as the longitudinal grooves 51d of the inner cylinder 51a of the rotor 51 engage with the elongated protrusions 30a of the valve stem holder 30, and as the lower face of the inner cylinder 51a of the rotor 51 abuts the engagement faces 30b of the valve stem holder 30, the rotor 51 is externally arranged around and fixed to the valve stem holder 30 while being positioned with respect to the valve stem holder 30, and the valve stem holder 30 rotates integrally with the rotor 51 while supporting the rotor 51 within the can 55.

As described above, as the rotor 51 is externally arranged around the valve stem holder 30, a predetermined magnetic pole 8a (or the center thereof) of the rotor 51 and a collision-contact plane Jb of the movable stopper 34 with respect to the fixed stopper 24 are positioned on a straight line CA passing through the axis O of rotation, as illustrated in a partially cutaway view of Fig. 4.

It should be noted that in this example, the rotor 51 engages with and is supported by the valve stem holder 30 so that the upper face of the valve stem holder 30 is located to be flush with or slightly above the upper face of the inner cylinder 51a of the rotor 51.

The upper side of the rotor 51 and the valve stem holder 30 is provided with a fixture 70 that is adapted to be externally fitted to and fixed to the upper end of the valve stem 10 (or the upper small-diameter portion 11 thereof) so as to prevent relative movement of the valve stem holder 30 and the rotor 51 in the up-down direction (that is, to allow the rotor 51 to engage with the valve stem holder 30 while preventing slippage therebetween) and to couple the valve stem 10 and the valve stem holder 30 together.

The fixture 70 is formed by press work, cutting work, or the like using a metal member, such as brass or SUS, for example, and includes a stepped cylindrical fixation portion 71, which includes an upper small-diameter portion 71a that is adapted to be externally fitted to the upper end of the valve stem 10 (or the upper small-diameter portion 11 thereof) and be securely joined thereto by press fit, welding, adhesion, bonding, or the like and a lower large-diameter portion 71b; and a disk-shaped flange portion 72 extending outward from the lower end of the fixation portion 71 (or the lower large-diameter portion 71b thereof) to a region around the inner cylinder 51a of the rotor 51. In this example, specifically, the middle portion of the upper small-diameter portion 71a (in the vertical direction) is welded in the direction from the lateral side (i.e., the outer periphery side) to the valve stem 10 side so that the fixture 70 is joined to a region around the upper end of the valve stem 10 (or the upper small-diameter portion 11 thereof) (i.e., a welded portion W). It should be noted that welding may be performed at a plurality of portions in the circumferential direction (around the axis O; for example, three points at equal intervals (i.e., equal angular intervals) in the circumferential direction) (for example, at the same time) or may be performed along the entire circumferential direction.

The lower face of the flange portion 72 is adapted to be opposite the upper face of the valve stem holder 30 and the upper face of the rotor 51 (or the inner cylinder 51a thereof), and is adapted to be opposite and in contact with the projections 35 (or the upper faces thereof) provided on the upper face of the valve stem holder 30 and the rotor 51 (or the upper face of the inner cylinder 51a thereof).

As described above, the rotor 51 is held between the valve stem holder 30, which is urged upward with the urging force of the coil spring 60, and the fixture 70 (or the outer periphery portion of the flange portion 72 thereof), and engages therewith so that slippage is prevented.

In addition, a restoring spring 75, which is a coil spring adapted to urge the valve stem holder 30 to the guide bush 20 side, is externally attached to the fixture 70 (or the lower large-diameter portion 71b of the fixation portion 71 thereof) fixed to the upper end of the valve stem 10 so as to prevent too much upward movement of the valve stem holder 30 with respect to the guide bush 20 during operation and thus prevent the threaded disengagement between the fixed threaded portion 23 of the guide bush 20 and the movable threaded portion 33 of the valve stem holder 30.

Meanwhile, a bifurcated whirl-stop tool 65 is securely attached to one side of the lower face side of the stator 52 to prevent relative rotation and relative movement of the stator 52 with respect to the can 55 and the valve body 40, that is, to perform positioning.

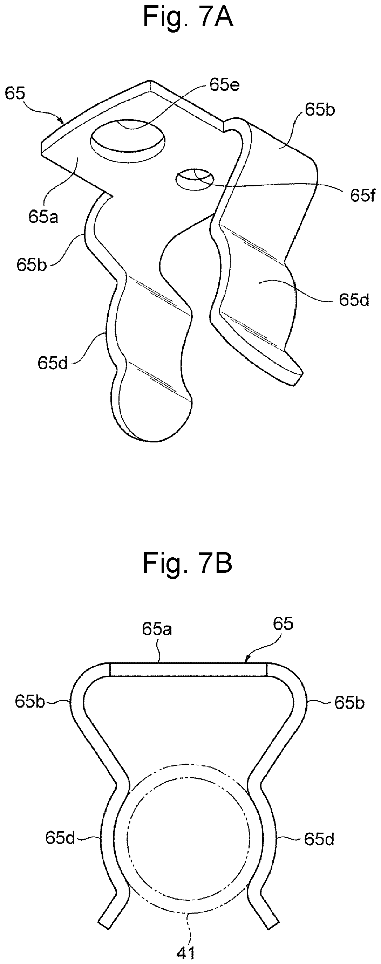

More specifically, the whirl-stop tool 65 is formed by stamping press work or the like using a conductive metal plate, and includes, as illustrated in Figs. 7A and 7B, a rectangular flat plate-like portion 65a and a pair of wavy plate-like elastic holding pieces 65b extending downward from the right and left inner periphery sides of the flat plate-like portion 65a and having arcuate holding portions 65d adapted to (elastically) hold the first conduit joint 41. The flat plate-like portion 65a has formed therein a through-hole 65e for passing a protruding portion at the lower end of a conducting member 62 described below, and a through-hole 65f for passing a positioning protrusion 66 formed in the resin mold 52d.

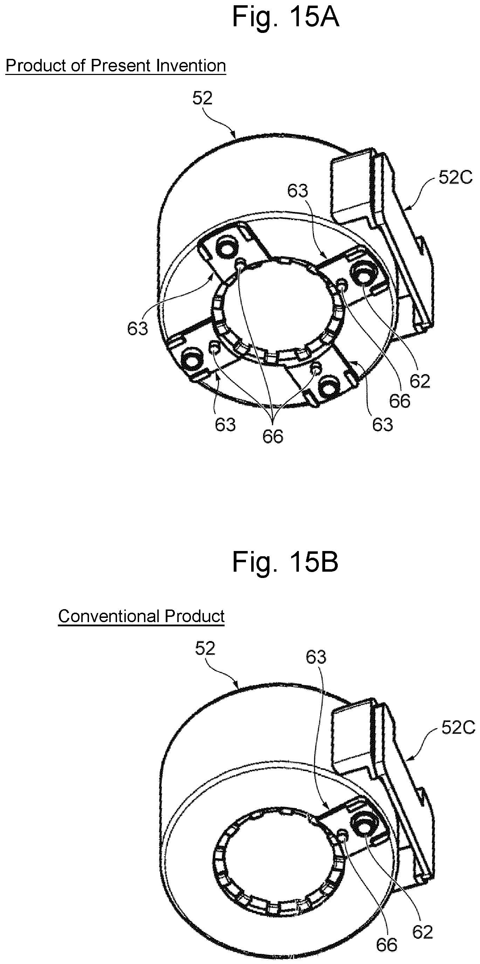

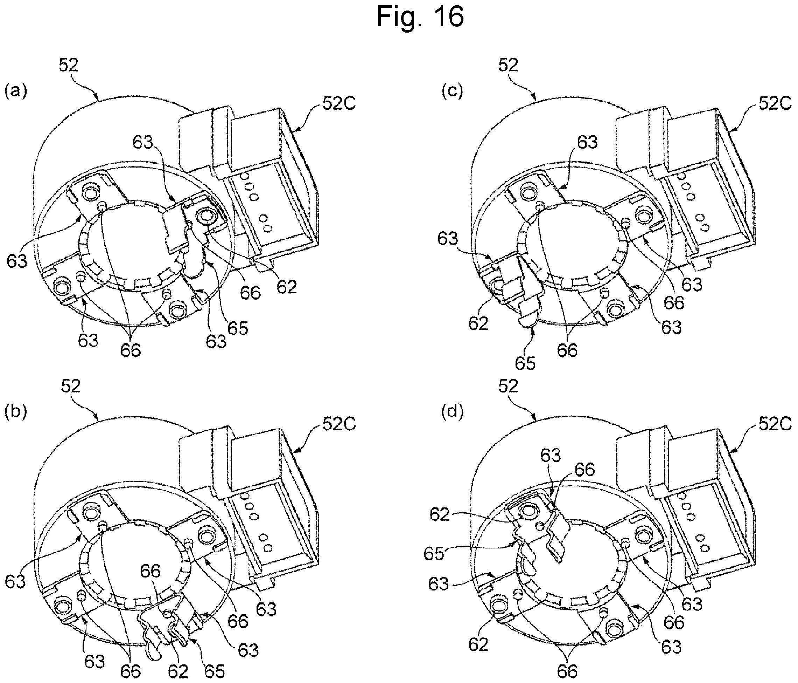

A conducting member 62 for electrically connecting the yoke 52u at the bottom of the stator 52 and the valve body 40 via the whirl-stop tool 65 is insert-molded in the resin mold 52d on one side of the lower face side of the stator 52 (in this example, the side of the lead wire connection portion 52C). The conducting member 62 is adapted to prevent generation of undesired electric discharge between the yokes 52u and 52v and the can 55, is formed in the shape of a cylinder with a flanged portion (i.e., step portion), has a lower end protruding downward (from the resin mold 52d), and is inserted through the through-hole 65e of the whirl-stop tool 65 and is fixed thereto by swaging or the like. In addition, as illustrated in Figs. 15A and 16, pedestal portions 63 each adapted to have the whirl-stop tool 65 securely attached thereto are radially arranged at four positions of the resin mold 52d that are at angular intervals of 90° including the portion where the conducting member 62 is arranged, and the positioning protrusion 66 adapted to be inserted through the through-hole 65f of the whirl-stop tool 65 is provided in a protruding manner at each pedestal portion 63.

When the stator 52 is externally arranged around the can 55 and the pair of elastic holding pieces 65b (or the arcuate holding portions 65d thereof) of the bifurcated whirl-stop tool 65 are made to engage with the conduit joint 41 to serve as the lateral inlet/outlet of the valve body 40 so as to hold the conduit joint 41, the stator 52 is fixed while being positioned with respect to the can 55 and the valve body 40 in the circumferential direction and the vertical direction. In the state in which the stator 52 is positioned, as illustrated in Figs. 11 and 12, (the dimensions and shape of each portion are set so that) a predetermined excitation magnetic pole 6a (or the center thereof) of the stator 52 is located on the center line C of the conduit joint 41 to serve as the lateral inlet/outlet of the valve body 40.

Next, the configurations of the guide bush 20 having the fixed threaded portion (i.e., the external threaded portion) 23, the bottom stopper base body 25 having the internal threaded portion 26, and the valve stem holder 30 having the movable threaded portion (i.e., the internal threaded portion) 33 will be supplementarily described from the perspective of base point determination (i.e., initialization).

In the motor-operated valve 1 of this example, the guide bush 20 is not provided with a mark (i.e., a D-cut surface or a cutout) for setting (or managing) the orientation of the guide bush 20 with respect to the fitting hole 44 of the valve body 40 unlike the motor-operated valve described as a conventional example (Patent Literature 2). Thus, the threading start position (i.e., the upper end side) of the fixed threaded portion (i.e., the external threaded portion) 23 of the guide bush 20 in the circumferential direction (as seen in a top view) is not determined, and differs from valve to valve.

In contrast, the threading start position (i.e., the lower end side) of the internal threaded portion 26 of the bottom stopper base body 25 in the circumferential direction (as seen in a top view) is arranged at the same position as a collision-contact plane Ja of the fixed stopper 24 with respect to the movable stopper 34, while the threading start position (i.e., the lower end side) of the movable threaded portion (i.e., the internal threaded portion) 33 of the valve stem holder 30 in the circumferential direction (as seen in a top view) is arranged at the same position as the collision-contact plane Jb of the movable stopper 34 with respect to the fixed stopper 24. That is, in the bottom stopper base body 25 and the valve stem holder 30, the collision-contact plane Ja of the fixed stopper 24 and the collision-contact plane Jb of the movable stopper 34 are used as marks for the respective threading start positions.

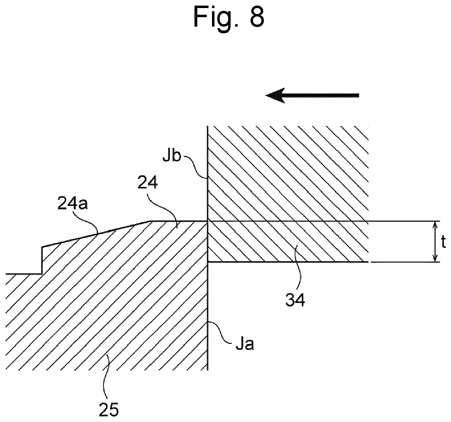

Herein, when the valve stem holder 30 is screwed onto the guide bush 20 and is rotated in the direction to close the valve (for example, clockwise as seen in a top view), the valve stem holder 30 is lowered (moves in a spiral manner) while being rotated by one pitch per rotation, and finally, the movable stopper 34 (or the collision-contact plane Jb thereof) collides with the fixed stopper 24 (or the collision-contact plane Ja thereof) and stops as illustrated in Fig. 8. In such a case, since the threading start position of the internal threaded portion 26 of the bottom stopper base body 25 is located at the same position as the collision-contact plane Ja and the threading start position of the movable threaded portion (i.e., internal threaded portion) 33 of the valve stem holder 30 is located at the same position as the collision-contact plane Jb, collision occurs at the position of an integral multiple of the thread pitch from the threading start position. Thus, regardless of the threading start position of the fixed threaded portion (i.e., the external threaded portion) 23 of the guide bush 20, the contact width t in the height direction between the fixed stopper 24 and the movable stopper 34 upon collision therebetween becomes the maximum possible value of the motor-operated valve 1 in this example. In this manner, as the contact width t between the movable stopper 34 and the fixed stopper 24 upon collision therebetween is large, breakage, wear, and the like of the movable stopper 34 and the fixed stopper 24 are reduced, and the reliability of the strength and durability is increased. It should be noted that the side of the fixed stopper 24 opposite to the collision-contact plane Ja has formed thereon an inclined flank 24a for avoiding contact between the fixed stopper 24 and the movable stopper 34.

### [Method for assembling motor-operated valve (of non-closed type)]

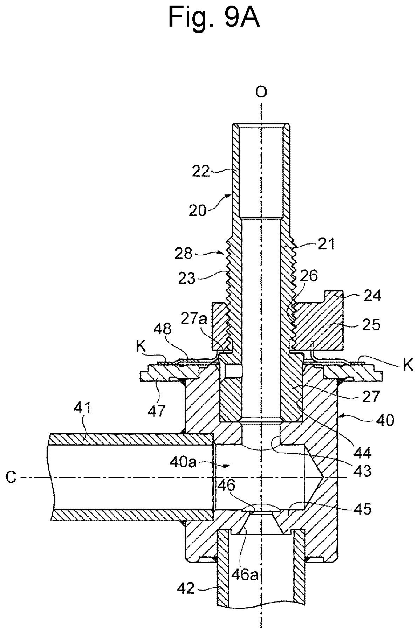

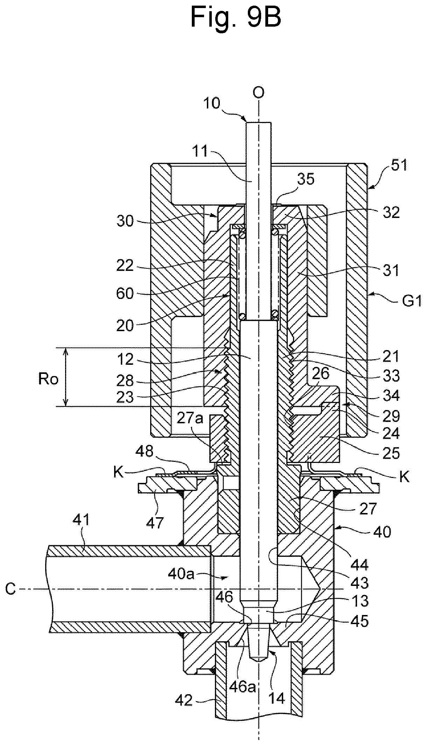

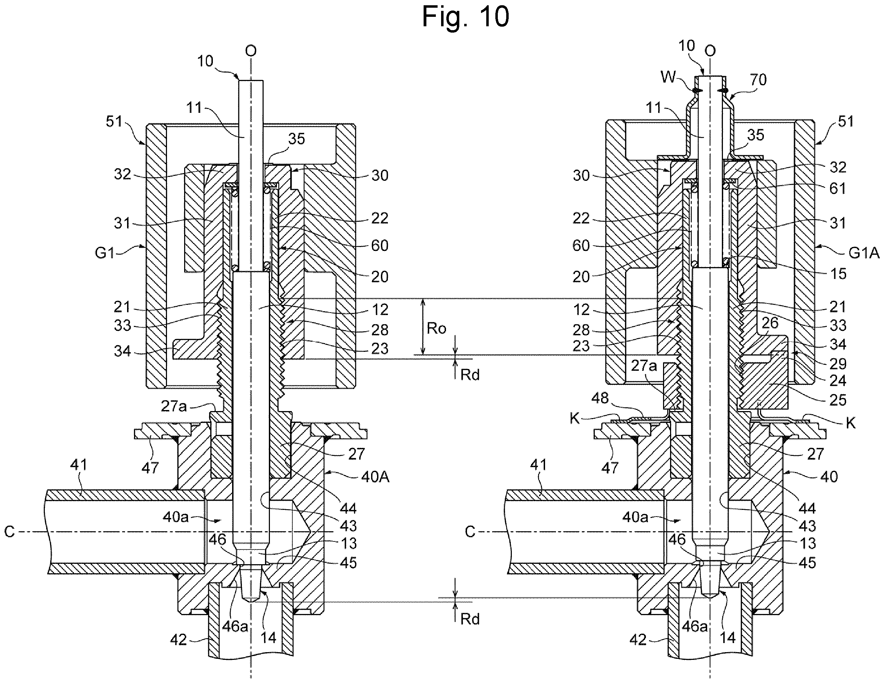

Next, an exemplary method for assembling the motor-operated valve 1 of a non-closed type of the present embodiment will be described while supplementing it with the configuration of the main part.
(1) First, the guide bush 20 (or the fitted portion 27 thereof) is press-fit fixed into the fitting hole 44 of the valve body 40 without being positioned in the circumferential direction. As described above, since the motor-operated valve 1 of this example is not provided with a mark (i.e., a D-cut surface or a cutout) for setting (or managing) the orientation of the guide bush 20, the correlation among the guide bush 20, the valve body 40, and the magnetic poles of the stator 52 is not set at this stage.
(2) Next, as illustrated in Fig. 9A, the stopper presser 48 is attached to the bottom of the bottom stopper base body 25 as described above, and the internal threaded portion 26 of the bottom stopper base body 25 is screwed onto the fixed threaded portion (i.e., the external threaded portion) 23 of the guide bush 20 and is then screwed down to a position near the proximal end of the fixed threaded portion (i.e., the external threaded portion) 23 in the direction to close the valve (for example, clockwise as seen in a top view). After that, the internal threaded portion 26 of the bottom stopper base body 25 is appropriately rotated slightly in the direction to open the valve and the direction to close the valve for adjustment purposes so that the collision-contact plane Ja of the fixed stopper 24 with respect to the movable stopper 34 is located on a particular straight line passing through (i.e., orthogonal to) the axis O of rotation of the rotor 51 as seen in a top view, that is, on the center line C of the conduit joint 41 to serve as the lateral inlet/outlet of the valve body 40 in this example as illustrated in Figs. 1, 11, and 12. In the motor-operated valve 1 of this example, a marking line is formed on the flanged plate 47, a jig (not illustrated), or the like so that it overlaps the center line C as seen in a top view, for example, and the marking line is used to adjust the position of the collision-contact plane Ja of the fixed stopper 24 in the rotation direction. It should be noted that in this example, the stopper presser 48 is inserted from above the bottom stopper base body 25 that has been screwed down to a position near the proximal end of the fixed threaded portion (i.e., the external threaded portion) 23.
(3) The bottom stopper base body 25 with the thus adjusted position is (relatively immovably) fixed to the immobile portion (in this example, the flanged plate 47) on the side of the valve body 40 via the stopper presser 48 by welding or the like (i.e., the joined portion K).
(4) Next, the rotor 51 is externally arranged around the valve stem holder 30 as described above. Accordingly, as illustrated in Fig. 4 (and Figs. 11 and 12), the predetermined magnetic pole 8a (or the center thereof) of the rotor 51 and the collision-contact plane Jb of the movable stopper 34 with respect to the fixed stopper 24 are positioned on the straight line CA passing through (i.e., orthogonal to) the axis O of rotation of the rotor 51. Next, the valve stem holder 30 having the coil spring 60 and the rotor 51 externally arranged therearound and the like are attached to the valve stem 10 without the fixture 70 fixed thereto, thereby obtaining an assembly G1.
(5) The valve stem holder 30 of the assembly G1 is screwed onto the guide bush 20 to allow the valve element 14 of the valve stem 10 to be seated on the valve seat 46, and as illustrated in Fig. 9B, the valve stem holder 30 is further rotated in the direction to close the valve to allow the movable stopper 34 to collide with the fixed stopper 24. The screw amount (i.e., rotation angle) at this time is indicated by Ro.
(6) Next, the assembly G1 illustrated in Fig. 9B in which the valve stem holder 30 has been screwed onto the guide bush 20 of the valve body 40 having the bottom stopper base body 25 fixed thereto by the screw amount (i.e., rotation angle) Ro is detached from the guide bush 20 of the valve body 40, and the valve stem holder 30 of the detached assembly G1 is screwed onto a guide bush 20 of another valve body 40A without the bottom stopper base body 25 fixed thereto as illustrated in the left view of Fig. 10 by the screw amount (i.e., rotation angle) Ro. The reason that the location of the assembly G1 is changed is that the valve stem holder 30 cannot be lowered any further with the valve body 40 having the bottom stopper base body 25 fixed thereto.
(7) Next, the valve stem holder 30 of the assembly G1, which has been screwed into the valve body 40A by Ro, is further rotated and lowered in the direction to close the valve by a rotation angle Rd corresponding to the gap of a predetermined size that should be formed between the valve element 14 and the valve seat 46 when the valve element 14 is at the lowest position, and such lowered position of the valve stem holder 30 is determined as the position where the valve stem holder 30 should be finally located with respect to the valve stem 10.
   Herein, the guide bush 20 press-fit fixed to the valve body 40 in Fig. 9B and the guide bush 20 press-fit fixed to the valve body 40A in the left view of Fig. 10 have the same specifications regarding the thread pitch and the like, though their threading start positions as seen in a top view are different. Thus, when the valve stem holder 30 is lowered by the screw amount (i.e., rotation angle) Ro + the rotation angle Rd on the side of the valve body 40A, it follows that the valve stem holder 30 has been lowered by the rotation angle Rd from the position with respect to the valve stem 10 seated on the valve seat 46 illustrated in Fig. 9B, that is, the valve stem holder 30 is located at a position lower by the gap of a predetermined size that should be formed between the valve element 14 and the valve seat 46 when the valve element 14 is at the lowest position in the motor-operated valve 1 of a non-closed type. It should be noted that the coil spring 60 at this time is further compressed by the rotation angle Rd.
(8) Next, as illustrated in the left view of Fig. 10, in the state in which the valve stem holder 30 has been lowered by the screw amount (i.e., rotation angle) Ro + the rotation angle Rd on the side of the valve body 40A, the fixture 70 is externally fitted to the upper portion of the valve stem 10 (or the upper small-diameter portion 11 thereof), and is placed on (i.e., arranged opposite and in contact with) the ceiling portion 32 of the valve stem holder 30 and is fixed to the valve stem 10 (or the upper small-diameter portion 11 thereof) by welding or the like as described above.
(9) After the fixture 70 is fixed to the valve stem 10 (or the upper small-diameter portion 11 thereof) on the side of the valve body 40A in the above manner, an assembly G1A with the fixture 70 is detached from the valve body 40A in the left view of Fig. 10, and the detached assembly G1A (or the valve stem holder 30 thereof) with the fixture 70 is screwed onto the guide bush 20 of the original valve body 40 having the bottom stopper base body 25 fixed thereto illustrated in Fig. 9B so that the location of the assembly G1A with the fixture 70 is changed from the valve body 40A to the original valve body 40. Accordingly, the attachment of the assembly G1A to the valve body 40 side is complete.

As described above, the valve stem holder 30 is further rotated and lowered in the direction to close the valve by the rotation angle Rd corresponding to the gap of a predetermined size that should be formed between the valve element 14 and the valve seat 46 when the valve element 14 is at the lowest position, in addition to the screw amount (i.e., rotation angle) Ro when the movable stopper 34 is caused to collide with the fixed stopper 24. In such a state, the fixture 70 is fixed to the valve stem 10 so that as illustrated in the right view of Fig. 10, the position of the valve element 14 when the movable stopper 34 (or the collision-contact plane Jb thereof) collides with the fixed stopper 24 (or the collision-contact plane Ja thereof), that is, the lowest position of the valve element 14 becomes higher by the rotation angle Rd, and thus, the gap of a predetermined size is formed between the valve element 14 and the valve seat 46.

After that, necessary processes, such as externally attaching the restoring spring 75 to the fixture 70, are performed, and then, the can 55 is hermetically joined to the valve body 40 (or a step portion provided on the outer periphery of the flanged plate 47 thereof).

(10) After that, the stator 52 is externally arranged around and fixed to the can 55. More specifically, the stator 52 is arranged around the can 55, and the pair of elastic holding pieces 65b (or the arcuate holding portions 65d thereof) of the bifurcated whirl-stop tool 65 are caused to engage with the conduit joint 41 to serve as the lateral inlet/outlet of the valve body 40 so as to hold the conduit joint 41. Accordingly, the stator 52 is fixed while being positioned with respect to the can 55 and the valve body 40 in the circumferential direction and the vertical direction. In such a positioned state of the stator 52, as illustrated in Figs. 11 and 12, the predetermined excitation magnetic pole 6a (or the center thereof) of the stator 52 is located on the center line C of the conduit joint 41 to serve as the lateral inlet/outlet of the valve body 40.

In the motor-operated valve 1 with such a configuration, when the rotor 51 is rotated with current conduction through and energization of the stator 52, the valve stem holder 30 and the valve stem 10 are rotated integrally with the rotor 51. At this time, the valve stem 10 is elevated or lowered together with the valve element 14 by the thread feeding mechanism 28, which includes the fixed threaded portion 23 of the guide bush 20 and the movable threaded portion 33 of the valve stem holder 30, so that the gap between the valve element 14 and the valve seat 46 (i.e., the lift amount or the valve opening degree) is increased or decreased and the flow rate of a fluid to flow through the valve port 46a is adjusted. In addition, even when the movable stopper 34 of the valve stem holder 30 abuts the fixed stopper 24 of the bottom stopper base body 25 fixed to the guide bush 20, and the valve element 14 is at the lowest position, a gap is formed between the valve element 14 and the valve seat 46 so that a predetermined flow rate is secured.

As described above, according to the method for assembling the motor-operated valve 1 of this example, at a stage where the rotor 51 is externally arranged around and fixed to the valve stem holder 30, the predetermined magnetic pole 8a (or the center thereof) of the rotor 51 and the collision-contact plane Jb of the movable stopper 34 with respect to the fixed stopper 24 are located on the straight line CA passing through the axis O of rotation of the rotor 51 (see Fig. 4).

In addition, the position of the collision-contact plane Ja of the fixed stopper 24 with respect to the movable stopper 34 is adjusted so that it is located on a particular straight line passing through the axis O of rotation as seen in a top view, that is, on the center line C of the conduit joint 41 to serve as the lateral inlet/outlet of the valve body 40 herein.

Further, positioning of the stator 52 with respect to the can 55 and the valve body 40 is performed using the bifurcated whirl-stop tool 65 attached to one side of the lower face of the stator 52, for example, so that the predetermined excitation magnetic pole 6a (or the center thereof) of the stator 52 is adjusted to be located on the center line C of the conduit joint 41 passing through the axis O of rotation as seen in a top view.

Therefore, when the movable stopper 34 collides with the fixed stopper 24, as clearly seen in Figs. 11 and 12, the predetermined magnetic pole 8a (or the center thereof) of the rotor 51, the collision-contact plane Jb of the movable stopper 34 with respect to the fixed stopper 24, the collision-contact plane Ja of the fixed stopper 24 with respect to the movable stopper 34, and the excitation magnetic pole 8a (or the center thereof) of the stator 52 are located on the center line C passing through the axis O of rotation. Thus, the excitation magnetic pole 6a (for example, an N-pole) of the stator 52 and the predetermined magnetic pole 8a (for example, an S-pole) of the rotor 51 can be arranged exactly directly opposite (i.e., facing) each other, and thus, the alignment of the magnetic poles can be appropriately performed.

In addition, in the method for assembling the motor-operated valve 1 of this example, after the bottom stopper base body 25 with the adjusted position of the collision-contact plane Ja of the fixed stopper 24 with respect to the movable stopper 34 is fixed to the immobile portion (in this example, the flanged plate 47) on the side of the valve body 40, the position of the fixture 70 with respect to the valve stem 10 is adjusted so that the position of the valve stem holder 30 with respect to the valve stem 10 in the vertical direction upon collision of the movable stopper 34 with the fixed stopper 24 is located at a predetermined position. Thus, base point determination can be accurately performed as well as the aforementioned alignment of the magnetic poles. When the motor-operated valve 1 is of a non-closed type as in this example, upon collision of the movable stopper 34 with the fixed stopper 24, a gap of a predetermined size can be formed between the valve element 14 and the valve seat 46, and also, the number of drive pulses that should be supplied to the stator 52 during initialization and the like becomes accurate (i.e., a minimum required number).

Therefore, according to the method for assembling the motor-operated valve 1 of this example, strict management of the guide bush 20, the valve body 40, and the like is not required, and when the movable stopper 34 collides with the fixed stopper 24, the predetermined excitation magnetic pole 6a of the stator 52 and the predetermined magnetic pole 8a of the rotor 51 can be arranged exactly directly opposite each other, and thus, both the alignment of the magnetic poles and the base point determination can be accurately performed. Therefore, it is possible to increase the flow rate control accuracy and the like while reducing the parts machining cost, product assembly cost, and the like, and also suppress positional deviation of the rotor 51 in the circumferential direction and the like during initialization. Consequently, generation of vibration and noise can be effectively suppressed.

### [Configuration of motor-operated valve (of pressure-closed type) and method for assembling the same]

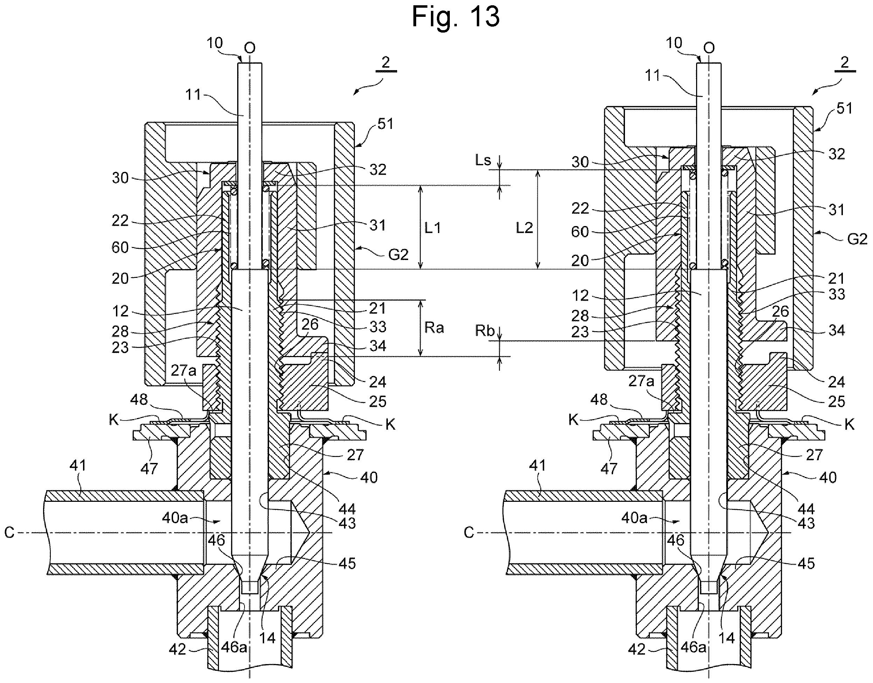

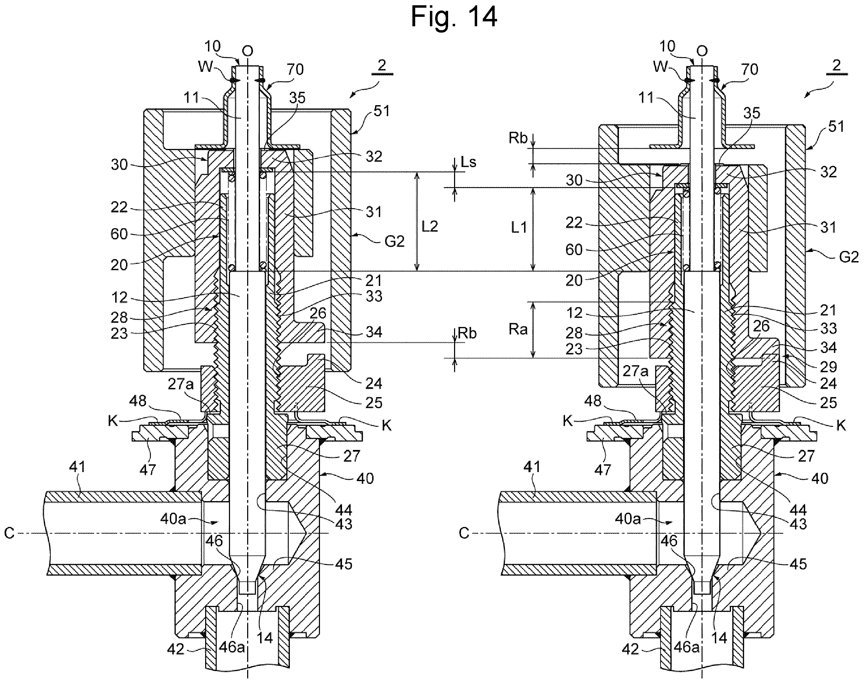

Next, the configuration of a motor-operated valve 2 of a pressure-closed type and a method for assembling the same will be described with reference to Figs. 13 and 14.

The motor-operated valve 2 of a pressure-closed type illustrated in Figs. 13 and 14 shares many configurations in common with the aforementioned motor-operated valve 1 of a non-closed type illustrated in Figs. 1 to 12. Thus, portions corresponding to the motor-operated valve 1 of a non-closed type are denoted by the same reference numerals or related reference numerals and overlapped description will be omitted. The following will mainly describe the difference of the configuration of the motor-operated valve 2 of a pressure-closed type and the assembling method therefor (in particular, the assembling method) from the configuration of the motor-operated valve 1 of a non-closed type and the assembling method therefor.

That is, the method for assembling the motor-operated valve 2 of a pressure-closed type of this example is approximately the same as the method for assembling the motor-operated valve 1 of a non-closed type up to the following steps:
(1) a step of press-fit fixing the guide bush 20,
(2) a step of adjusting the position of the collision-contact plane Ja of the fixed stopper 24 in the rotation direction,
(3) a step of fixing the bottom stopper base body 25, and
(4) a step of externally arranging the rotor 51 around the valve stem holder 30, for example, to obtain an assembly G2.
(5) Next, as illustrated in the left view of Fig. 13, the valve stem holder 30 of the assembly G2 obtained in step (4) is screwed onto the guide bush 20 to allow the valve element 14 of the valve stem 10 to be seated on the valve seat 14, and then, the valve stem holder 30 is further rotated in the direction to close the valve to allow the movable stopper 34 (or the collision-contact plane Jb thereof) to collide with the fixed stopper 24 (or the collision-contact plane Ja thereof). The screw amount (i.e., rotation angle) of the valve stem holder 30 with respect to the guide bush 20 at this time is indicated by Ra.
(6) From the state in which the valve stem holder 30 has been screwed onto the guide bush 20 by the screw amount (i.e., rotation angle) Ra in step (5), the valve stem holder 30 is, as illustrated in the right view of Fig. 13, rotated and elevated in the direction to open the valve by a rotation angle Rb corresponding to the amount of difference Ls, which corresponds to the value obtained by subtracting a design value L1 of the length that the coil spring 60 should have when the movable stopper 34 collides with the fixed stopper 24 from a design value L2 of the length that the coil spring 60 should have when the valve element 14 is seated on the valve seat 46, and the elevated position of the valve stem holder 30 is determined as the position where the valve stem holder 30 should be finally located with respect to the valve stem 10. Herein, the design values L2 and L1 of the length that the coil spring 60 should have are determined in advance in the design phase.
(7) Next, in the state in which the valve stem holder 30 has been elevated with respect to the valve stem 10 by the rotation angle Rb, the fixture 70 is externally fitted to the upper portion of the valve stem 10 (or the upper small-diameter portion 11 thereof) as illustrated in the left view of Fig. 14, and is placed on (or arranged opposite and in contact with) the ceiling portion 32 of the valve stem holder 30 and is fixed to the valve stem 10 (or the upper small-diameter portion 11 thereof) by welding or the like as described above. After that, necessary processes, such as externally attaching the restoring spring 75 to the fixture 70, are performed, and then, the can 55 is hermetically joined to the valve body 40 (or a step portion provided on the outer periphery of the flanged plate 47 thereof).
(8) After that, as with the method for assembling the motor-operated valve 1 of a non-closed type, the stator 52 is externally arranged around the can 55, and the pair of elastic holding pieces 65b (or the arcuate holding portions 65d thereof) of the bifurcated whirl-stop tool 65 are caused to engage with the conduit joint 41 to serve as the lateral inlet/outlet of the valve body 40 so as to hold the conduit joint 41. Accordingly, the stator 52 is fixed while being positioned with respect to the can 55 and the valve body 40 in the circumferential direction and the vertical direction. In the state in which the stator 52 is positioned, as illustrated in Figs. 11 and 12, the predetermined excitation magnetic pole 6a (or the center thereof) of the stator 52 is located on the center line C of the conduit joint 41 to serve as the lateral inlet/outlet of the valve body 40.

In the thus assembled motor-operated valve 2 of a pressure-closed type of this example, even after the valve element 14 has been seated on the valve seat 46, the valve stem holder 30 continues to be lowered until the movable stopper 34 collides with the fixed stopper 24. At this time, since the valve element 14 is seated on the valve seat 46, as illustrated in the right view of Fig. 14, the upper face of the valve stem holder 30 (or the ceiling portion 32 thereof) becomes away from the lower face of the fixture 70 (or the flange portion 72 thereof), and the coil spring 60 is compressed. Thus, when the movable stopper 34 collides with the fixed stopper 24, the upper face of the valve stem holder 30 (or the ceiling portion 32 thereof) is located below the lower face of the fixture 70 (or the flange portion 72 thereof) by the rotation angle Rb.

As is clear from the foregoing description, even with the method for assembling the motor-operated valve 2 of this example, operational advantages similar to those of the method for assembling the motor-operated valve 1 of a non-closed type can be obtained. However, since the motor-operated valve 2 is, in particular, of a pressure-closed type, the length (i.e., the actual length) of the coil spring (i.e., the urging member) 60 becomes a predetermined length and the valve element 14 can thus be pressed against the valve seat 46 with a predetermined pressure upon collision of the movable stopper 34 with the fixed stopper 24, and also, after the valve element 14 has been seated on the valve seat 46 during initialization, for example, the number of drive pulses that should be supplied to the stator 52 up to the base point position where the movable stopper 34 collides with the fixed stopper 24 and thus stops as well as the number of drive pulses that should be supplied to the stator 52 up to the valve opening point where the valve element 14 is moved away from the valve seat 46 from the base point position, for example, becomes accurate (i.e., a minimum required number).

Thus, even with the method for assembling the motor-operated valve 2 of a pressure-closed type of this example, strict management of the guide bush 20, the valve body 40, and the like is not required, and when the movable stopper 34 collides with the fixed stopper 24, the predetermined excitation magnetic pole 6a of the stator 52 and the predetermined magnetic pole 8a of the rotor 51 can be arranged exactly directly opposite each other, and thus, both the alignment of the magnetic poles and the base point determination can be accurately performed. Therefore, it is possible to increase the flow rate control accuracy and the like while reducing the parts machining cost, product assembly cost, and the like, and also suppress positional deviation of the rotor 51 in the circumferential direction and the like during initialization. Consequently, generation of vibration and noise can be effectively suppressed.

Although the aforementioned embodiment illustrates an example in which positioning of the stator 52 with respect to the can 55 and the valve body 40 is performed using the bifurcated whirl-stop tool 65 attached to one side of the lower face of the stator 52, and the positioning is performed such that an excitation magnetic pole (or the center thereof) of the stator 52 is located on a particular straight line passing through the axis O of rotation as seen in a top view, specifically, on the center line C of the conduit joint 41 to serve as the lateral inlet/outlet of the valve body 40, the particular straight line passing through the axis O of rotation is not limited to the center line C. That is, since the magnetic poles of the stator 52 are arranged such that the same configuration is repeated every 30° as illustrated in Fig. 12, it is acceptable as long as a straight line that is at an interval of 30° from the center line C is used as the particular straight line passing through the axis O of rotation.

It should be noted that as described above, the conducting member 62 for electrically connecting the yoke 52u and the valve body 40 is embedded in the resin mold 52d on one side of the lower face side of the stator 52 of this example. The conducting member 62 is adapted to prevent generation of undesired electric discharge between the yokes 52u and 52v and the can 55, is formed in the shape of a cylinder with a flanged portion (i.e., step portion), and has a lower end protruding downward (from the resin mold 52d). The aforementioned bifurcated whirl-stop tool 65 is securely attached to the stator 52 via the conducting member 62 (i.e., with the lower end of the conducting member 62 inserted through the through-hole 65e of the whirl-stop tool 65 and fixed thereto by swaging, expansion, or the like).

In addition, as illustrated in Figs. 15A and 16, pedestal portions 63 each adapted to have the whirl-stop tool 65 securely attached thereto are radially arranged at a plurality of positions including the portion where the conducting member 62 is arranged on the lower face side of the stator 52, specifically, four positions that are at angular intervals of 90° in this example. The positioning protrusion 66 adapted to be inserted through the through-hole 65f of the whirl-stop tool 65 is provided in a protruding manner at each pedestal portion 63. Each pedestal portion 63 can have the whirl-stop tool 65 securely attached thereto as long as the conducting member 62 is inserted as illustrated in Figs. 16.

Conventionally, a pedestal portion is provided only at one position as illustrated in Fig. 15B. In contrast, when the pedestal portions 63 are radially provided at a plurality of positions as in this example, it becomes only necessary to change the position of insertion of the conducting member 62 when changing the attachment position of the whirl-stop tool 65. That is, although it has been conventionally necessary to change a mold to change the attachment position of the whirl-stop tool 65, adopting the aforementioned configuration can eliminate the need to change a mold when changing the attachment position of the whirl-stop tool 65, and thus can easily change the attachment position of the whirl-stop tool 65.

In the motor-operated valves 1 and 2 of this example, as described above, the bifurcated whirl-stop tool 65 attached to one side of the lower face of the stator 52 is caused to engage with the conduit joint 41 to perform positioning of the stator 52 with respect to the can 55 and the valve body 40, and when the movable stopper 34 collides with the fixed stopper 24, the excitation magnetic pole (for example, an N-pole) of the stator 52 and the predetermined magnetic pole 8a (for example, an S-pole) of the rotor 51 can be arranged exactly directly opposite (facing) each other, and thus, the alignment of the magnetic poles can be performed appropriately. In such a case, since the magnetic poles of the stator 52 are arranged such that the same configuration is repeated every 30°, the excitation magnetic pole of the stator 52 and the predetermined magnetic pole of the rotor 51 can be arranged exactly directly opposite (i.e., facing) each other even when the attachment position of the whirl-stop tool 65 is changed by 90°.

### Reference Signs List

- 1: Motor-operated valve (of non-closed type)
- 2: Motor-operated valve (of pressure-closed type)
- 10: Valve stem
- 14: Valve element
- 20: Guide bush
- 23: Fixed threaded portion (external threaded portion)
- 24: Fixed stopper
- 25: Bottom stopper base body
- 26: Internal threaded portion (threaded portion)
- 27: Fitted portion
- 28: Thread feeding mechanism
- 29: Stopper mechanism
- 30: Valve stem holder
- 32: Ceiling portion
- 33: Movable threaded portion (internal threaded portion)
- 34: Movable stopper
- 35: Projection
- 40: Valve body
- 40a: Valve chamber
- 41: First conduit joint
- 42: Second conduit joint
- 44: Fitting hole
- 46: Valve seat
- 46a: Valve port
- 47: Flanged plate
- 48: Stopper presser
- 50: Stepping motor
- 51: Rotor
- 52: Stator
- 55: Can
- 60: Coil spring (urging member)
- 62: Conducting member
- 63: Pedestal portion
- 65: Whirl-stop tool
- 65a: Flat plate-like portion
- 65b: Elastic holding piece
- 65d: Arcuate holding portion
- 66: Protrusion
- 70: Fixture
- 72: Flange portion
- O: Axis of rotation

## Claims

1. A motor-operated valve (1) comprising:
a valve stem (10) with a valve element (14);
a guide bush (20) in which the valve stem (10) is adapted to be inserted in a relatively movable manner along and a relatively rotatable manner about an axis (O) direction;
a valve body (40) having the guide bush (20) securely attached thereto and having a valve seat, the valve element (14) being adapted to move into contact with or away from the valve seat (46);
a valve stem holder (30) externally arranged around the valve stem (10) in a relatively movable manner along and a relatively rotatable manner about the axis direction;
an urging member provided between the valve stem (10) and the valve stem holder (30) so as to urge the valve element (14) in a direction to close the valve;
a fixture (70) externally fitted to and fixed to the valve stem (10) and arranged opposite and in contact with the valve stem holder (30) so as to substantially securely couple the valve stem (10) and the valve stem holder (30) together in cooperation with the urging member;
a can (55) hermetically joined to the valve body (40);
a stepping motor (50) having a rotor (51) and a stator (52) to rotate the valve stem holder (30) with respect to the guide bush, the rotor (51) being arranged on an inner side of the can (55) and fixed to the valve stem holder, the stator (52) being externally fitted to and fixed to the can (55);
a thread feeding mechanism (28) including a fixed threaded portion (23) and a movable threaded portion (33) to elevate or lower the valve element (14) with respect to the valve seat (46), the fixed threaded portion (23) being formed on the guide bush (20), the movable threaded portion (33) being formed on the valve stem holder (30); and
a stopper mechanism (29) including a fixed stopper (24) and a movable stopper (34) to regulate rotational lowering of the valve stem holder (30), the fixed stopper (24) being provided on a bottom stopper base body (25) having a threaded portion adapted to be screwed onto the fixed threaded portion (23) of the guide bush, the movable stopper (34) being provided on the valve stem holder (30),
wherein:
the rotor (51) is fixed to the valve stem holder (30) while being positioned in a particular rotation direction and a particular vertical direction, and the stator (52) is externally fitted to and fixed to the can (55) and the valve body (40) while being positioned in a particular circumferential direction and the particular vertical direction,
a predetermined magnetic pole of the rotor (51) and a collision-contact plane (Jb) of the movable stopper (34) with respect to the fixed stopper (24) are located on a straight line passing through an axis of rotation of the rotor (51), and a collision-contact plane of the fixed stopper (24) with respect to the movable stopper (34) and a predetermined excitation magnetic pole of the stator (52) are located on a particular straight line passing through the axis of rotation or on a straight line that is at a predetermined angular interval from the particular straight line, and
the collision-contact planes (Ja, Jb) of the movable stopper (34) and the fixed stopper (24) when the movable stopper (34) collides with the fixed stopper (24) do not coincide with a threading start position of the guide bush (20) as seen in a top view,
further comprising:
a conducting member (62) partially embedded in a resin mold (52d) on one side of a lower face side of the stator (52), the conducting member (62) being adapted to electrically connect a yoke of the stator (52) and the valve body (40); and
a whirl-stop tool (65) securely attached to the stator (52) via the conducting member (62), the whirl-stop tool (65) having a pair of arcuate holding portions (65d) adapted to hold a conduit joint (41) to serve as a lateral inlet/outlet of the valve body (40),
**characterized in that**
the motor-operated valve (1) further comprises a plurality of pedestal portions (63) radially arranged at equal angular intervals on the lower face side of the stator (52), any one of the pedestal portions (63) being adapted to have the whirl-stop tool (65) securely attached thereto, wherein the whirl-stop tool (65) is formed by stamping press or the like using a conductive metal plate, and includes a rectangular flat plate-like portion (65a) and a pair of wavy plate-like elastic holding pieces (65b) extending downward from the right and left inner periphery sides of the flat plate-like portion (65a) and having the arcuate holding portions (65d) adapted to elastically hold the first conduit joint (41),
and the conducting member (62), which is adapted to prevent generation of undesired electric discharge between yokes (52u, 52v) and the cam, is formed in the shape of a cylinder with a flanged portion, has a lower end protruding downward, and is inserted through a through-hole (65e) of the whirl-stop tool (65) and is fixed thereto by swaging or the like,
wherein the pedestal portions (63) are radially arranged at four positions of the resin mold (52d) that are at angular intervals of 90° including the portion where the conducting member (62) is arranged, and a positioning protrusion (66) adapted to be inserted through the through-hole (65f) of the whirl-stop tool (65) is provided in a protruding manner at each pedestal portion (63).

2. The motor-operated valve (1) according to claim 1, further comprising a stopper presser (48) externally attached to the bottom stopper base body (25) in a relatively unrotatable manner and fixed to an immobile portion on a side of the valve body (40).

3. A method for assembling a motor-operated valve (1) according to any one of claims 1, 2, the method comprising:
(a) a step of fixing the guide bush (20) to the valve body (40) without positioning the guide bush (20) in a determined circumferential direction;
(b) a step of screwing the bottom stopper base body (25) onto the guide bush (20), and rotating the bottom stopper base body (25) so as to adjust a position of a collision-contact plane (Ja) of the fixed stopper (24) with respect to the movable stopper (34) such that the collision-contact plane (Ja) is located on a particular straight line passing through an axis of rotation (O) of the rotor (51) or on a straight line that is at a predetermined angular interval from the particular straight line as seen in a top view;
(c) a step of fixing the bottom stopper base body (25) with the position adjusted in the step (b) to an immobile portion on a side of the valve body (40);
(d) a step of positioning the rotor (51) with respect to the valve stem holder (30) and attaching the valve stem holder (30) having the urging member and the rotor (51) fixed thereto to the valve stem (10) without the fixture (70) fixed thereto, thereby obtaining an assembly;
(e) a step of screwing the valve stem holder (30) of the assembly obtained in the step (d) onto the guide bush (20) to allow the valve element (14) to be seated on the valve seat (46), and further rotating the valve stem holder (30) in the direction to close the valve to allow the movable stopper (34) to collide with the fixed stopper (24);
(f) a step of rotating the valve stem holder (30) in the direction to close the valve or a direction to open the valve by a predetermined amount based on a screw amount of the valve stem holder (30) with respect to the guide bush (20) when the movable stopper (34) has collided with the fixed stopper (24) in the step (e), thereby moving the valve stem holder (30) to a position where the valve stem holder (30) should be finally located with respect to the valve stem (10) when the movable stopper (34) collides with the fixed stopper (24);
(g) a step of externally fitting the fixture (70) to the valve stem (10) and arranging the fixture (70) so as to be opposite and in contact with the valve stem holder (30) after the step (f), thereby fixing the fixture (70) to the valve stem (10); and
(h) a step of externally fitting the stator (52) to the can (55) and fixing the stator (52) to the can (55) while the stator (52) is positioned in the circumferential direction and a vertical direction.

4. The method for assembling a motor-operated valve (1) according to claim 3,
wherein provided that the motor-operated valve (1) is of a non-closed type in which when the movable stopper (34) collides with the fixed stopper (24), the valve element (14) is at a lowest position and a gap of a predetermined size is formed between the valve element (14) and the valve seat (46),
the step (f) includes relatively rotating and lowering the valve stem holder (30), which has been screwed onto the guide bush (20) by the screw amount, in the direction to close the valve by a rotation angle corresponding to the gap of the predetermined size that should be formed between the valve element (14) and the valve seat (46), and determining the lowered position of the valve stem holder (30) as a position where the valve stem holder (30) should be finally located with respect to the valve stem (10).

5. The method for assembling a motor-operated valve (1) according to claim 3,
wherein provided that the motor-operated valve (1) is of a pressure-closed type in which even after the valve element (14) has been seated on the valve seat, the valve stem holder (30) continues to be lowered until the movable stopper (34) collides with the fixed stopper (24),
the step (f) includes rotating and elevating the valve stem holder (30), which has been screwed onto the guide bush (20) by the screw amount, in the direction to open the valve by a rotation angle corresponding to an amount of difference that is obtained by subtracting a design value of a length that the urging member should have when the movable stopper (34) collides with the fixed stopper (24) from a design value of a length that the urging member should have when the valve element (14) is seated on the valve seat (46), and determining the elevated position of the valve stem holder (30) as a position where the valve stem holder (30) should be finally located with respect to the valve stem (10).

6. The method for assembling a motor-operated valve (1) according to any one of claims 3 to 5, wherein a center line of a conduit joint (41) to serve as a lateral inlet/outlet of the valve body (40), or an extended line of the center line is used as the particular straight line passing through the axis of rotation of the bottom stopper base body (25).

7. The method for assembling a motor-operated valve (1) according to any one of claims 3 to 6, wherein positioning of the stator (52) with respect to the can (55) and the valve body (40) in the circumferential direction and the vertical direction is performed using a whirl-stop tool (65) attached to one side of a lower face side of the stator (52), the whirl-stop tool (65) having a pair of arcuate holding portions (65d) adapted to hold the conduit joint (41) to serve as the lateral inlet/outlet of the valve body (40).

8. The method for assembling a motor-operated valve (1) according to any one of claims 3 to 7, wherein in the step (c), a stopper presser externally attached to the bottom stopper base body (25) in a relatively unrotatable manner and fixed to the immobile portion on the side of the valve body (40) is used for the step of fixing the bottom stopper base body (25) to the immobile portion on the side of the valve body (40).

## Patentansprüche

1. Ein motorbetriebenes Ventil (1) umfassend:
einen Ventilschaft (10) mit einem Ventilelement (14),
eine Führungsbuchse (20), wobei der Ventilschaft (10) dazu eingerichtet ist, relativ beweglich entlang und relativ drehbar um eine Achsrichtung (O) in die Führungsbuchse (20) eingesetzt zu werden,
einen Ventilkörper (40), an welchem die Führungsbuchse (20) befestigt ist, mit einem Ventilsitz (46), wobei das Ventilelement (14) dazu eingerichtet ist, sich mit dem Ventilsitz in Kontakt oder von ihm weg zu bewegen,
einen Ventilschafthalter (30), der außen um den Ventilschaft (10) herum relativ beweglich entlang und relativ drehbar um die Achsrichtung angeordnet ist,
ein Druckelement, dass zwischen dem Ventilschaft (10) und dem Ventilschafthalter (30) angeordnet ist, um das Ventilelement (14) in eine Richtung zum Schließen des Ventils zu drängen,
eine Halterung (70), die außen an dem Ventilschaft (10) angeordnet und am Ventilschaft (10) befestigt ist und dem Ventilschafthalter (30) gegenüber und in Kontakt mit dem Ventilschafthalter (30) angeordnet ist, um den Ventilschaft (10) und den Ventilschafthalter (30) zusammen mit dem Druckelement sicher miteinander zu verbinden,
eine Hülse (55), die mit dem Ventilkörper (40) hermetisch verbunden ist,
einen Schrittmotor (50) mit einem Rotor (51) und einem Stator (52) zum Drehen des Ventilschafthalters (30) in Bezug auf die Führungsbuchse (20), wobei der Rotor (51) an einer Innenseite der Hülse (55) angeordnet und an dem Ventilschafthalter befestigt ist, und wobei der Stator (52) außen an der Hülse (55) angeordnet und befestigt ist,
einen Gewindevorschubmechanismus (28) mit einem festen Gewindeabschnitt (23) und einem beweglichen Gewindeabschnitt (33) zum Anheben oder Absenken des Ventilelementes (14) in Bezug auf den Ventilsitz, wobei der feste Gewindeabschnitt (23) an der Führungsbuchse (20) ausgebildet ist, und wobei der bewegliche Gewindeabschnitt (33) an dem Ventilschafthalter (30) ausgebildet, und
einen Anschlagmechanismus (29), der einen festen Anschlag (24) und einen beweglichen Anschlag (34) zur Regulierung einer Rotationsabsenkung des Ventilschafthalters umfasst, wobei der feste Anschlag (24) an einem unteren Anschlaggrundkörper (25) ausgebildet ist, der einen Gewindeabschnitt umfasst, der zum Aufschrauben auf den feststehenden Gewindeabschnitt (23) der Führungsbuchse eingerichtet ist, und wobei der bewegliche Anschlag (34) am Ventilschafthalter (30) ausgebildet ist,
wobei:
der Rotor (51) in einer bestimmten Drehrichtung und in einer bestimmten vertikalen Richtung positioniert am Ventilschafthalter (30) befestigt ist, und der Stator (52) in einer bestimmten Umfangsrichtung und in der bestimmten Vertikalrichtung positioniert außen an der Hülse (55) und dem Ventilkörper (40) angeordnet und befestigt ist,
ein vorbestimmter magnetischer Pol des Rotors (51) und eine Kollisions-Kontaktebene (Jb) des beweglichen Anschlags (34) in Bezug auf den feststehenden Anschlag (24) auf einer geraden Linie angeordnet sind, die eine Drehachse des Rotors (51) schneidet, und eine Kollisions-Kontaktebene des feststehenden Anschlags (24) in Bezug auf den beweglichen Anschlag (34) und ein vorbestimmter magnetischer Anregungspol des Stators (52) sind auf einer bestimmten geraden Linie angeordnet, die die Drehachse schneidet, oder auf einer geraden Linie, die sich in einem vorbestimmten Winkelintervall von der bestimmten geraden Linie erstreckt, und
die Kollisions-Kontaktebenen (Ja, Jb) des beweglichen Anschlags (34) und des festen Anschlags (24) stimmen nicht mit einer in einer Draufsicht zu sehenden Gewindestartposition der Führungsbuchse (20) überein, wenn der bewegliche Anschlag (34) mit dem festen Anschlag (24) kollidiert,
ferner umfassend:
ein leitendes Element (62), das auf einer Seite einer Unterseite des Stators (52) teilweise in eine Harzform (52d) eingebettet ist, wobei das leitende Element (62) dazu eingerichtet ist, ein Joch des Stators (52) und den Ventilkörper (40) elektrisch zu verbinden, und
ein Wirbelanschlagwerkzeug (65), das über das leitende Element (62) fest mit dem Stator (52) verbunden ist, wobei das Wirbelanschlagwerkzeug (65) ein Paar bogenförmiger Halteabschnitte (65d) umfasst, die dazu eingerichtet sind, die Leitungsverbindung (41) zu halten, um als seitlicher Einlass/Auslass des Ventilkörpers (40) zu dienen,
**dadurch gekennzeichnet, dass** das motorbetriebene Ventil (1) ferner eine Mehrzahl von radial in gleichen Winkelabständen an der Unterseite des Stators (52) angeordneten Sockelabschnitten (63) umfasst, wobei jeder der Sockenabschnitte (63) dazu eingerichtet ist, das Wirbelanschlagwerkzeug (65) fest daran angebracht zu haben,
wobei das Wirbelanschlagwerkzeug (65) durch eine Stanzpresse oder dergleichen unter Verwendung einer leitfähigen Metallplatte geformt wird und einen rechteckigen flachen plattenförmigen Abschnitt (65a) und ein Paar wellenförmiger plattenförmiger elastischer Haltestücke (65b) umfasst, die sich von den rechten und linken Innenumfangsseiten des flachen plattenartigen Abschnitts (65a) nach unten erstrecken und die bogenförmigen Halteabschnitte umfassen (65d), die zum elastischen Halten der ersten Leitungsverbindung (41) eingerichtet sind,
und das leitende Element (62), das dazu eingerichtet ist, die Erzeugung unerwünschter elektrischer Entladung zwischen Jochs (52u, 52v) und der Nocke zu verhindern, zylinderförmig mit einem Flanschabschnitt ausgebildet ist, ein nach unten abstehendes unteres Ende hat und durch eine Durchgangsöffnung (65e) des Wirbelanschlagwerkzeugs (65) eingeführt und durch Verpressen oder dergleichen daran befestigt ist,
wobei die Sockelabschnitte (63) radial an vier Positionen der Harzform (52d) angeordnet sind, die in Winkelabständen von 90° angeordnet sind, einschließlich des Abschnitts, in dem das leitende Element (62) angeordnet ist, und wobei ein Positionierungsvorsprung (66), der zum Einführen durch die Durchgangsöffnung (65f) des Wirbelanschlagwerkzeugs (65) eingerichtet ist, an jedem Sockelabschnitt (63) vorstehend ausgebildet ist.

2. Motorbetriebenes Ventil (1) nach Anspruch 1, ferner umfassend einen Anschlagdrücker (48), der außen am unteren Anschlaggrundkörper (25) in einer relativ drehfesten Weise angeordnet ist und an einem unbeweglichen Abschnitt auf einer Seite des Ventilkörpers (40) befestigt ist.

3. Verfahren zum Montieren eines motorbetriebenen Ventils (1) nach einem der Ansprüche 1 oder 2, welches Verfahren umfasst:
(a) einen Schritt der Befestigung der Führungsbuchse (20) am Ventilkörper (40) ohne ein Positionieren der Führungsbuchse (20) in einer bestimmten Umfangsrichtung;
(b) einen Schritt des Aufschraubens des unteren Anschlaggrundkörpers (25) auf die Führungsbuchse (20) und Drehen des unteren Anschlaggrundkörpers (25) zum Einstellen einer Position einer Kollisions-Kontaktebene (Ja) des feststehenden Anschlags (24) in Bezug auf den beweglichen Anschlag (34), so dass sich die Kollisions-Kontaktebene (Ja) auf einer bestimmten geraden Linie befindet, die durch eine Drehachse (O) des Rotors (51) verläuft, oder auf einer geraden Linie, die in einem vorbestimmten Winkelintervall zu der bestimmten geraden Linie in einer Draufsicht steht;
(c) einen Schritt des Befestigens des unteren Anschlaggrundkörpers (25) mit der im Schritt (b) eingestellten Position an einem unbeweglichen Abschnitt auf einer Seite des Ventilkörpers (40);
(d) einen Schritt des Positionierens des Rotors (51) in Bezug auf den Ventilschafthalter (30) und des Befestigens des Ventilschafthalters (30), mit dem daran befestigten Druckelement und dem Rotor (51), an dem Ventilschafthalter (30), ohne dass die Halterung (70) an dem Ventilschafthalter (30) befestigt ist, und dadurch Erhalten einer Baugruppe;
(e) einen Schritt des Aufschraubens des Ventilschafthalters (30) der im Schritt (d) erhaltenen Baugruppe auf die Führungsbuchse (20), um ein Aufsetzen des Ventilelements (14) auf dem Ventilsitz (46) zu ermöglichen, weiteres Drehen des Ventilschafthalters (30) in die Richtung, in der das Ventil geschlossen wird, damit der bewegliche Anschlag (34) mit dem festen Anschlag (24) kollidieren kann;
(f) einen Schritt des Drehens des Ventilschafthalters (30) in die Richtung zum Schließen des Ventils oder in eine Richtung zum Öffnen des Ventils um einen vorgegebenen Betrag basierend auf einem Schraubbetrag des Ventilschafthalters (30) in Bezug auf die Führungsbuchse (20), wenn der bewegliche Anschlag (34) mit dem feststehenden Anschlag (24) im Schritt (e) kollidiert ist, wodurch der Ventilschafthalter (30) in eine Position gebracht wird, in der der Ventilschafthalter (30) in Bezug auf den Ventilschaft (10) final angeordnet sein soll, wenn der bewegliche Anschlag (34) mit dem feststehenden Anschlag (24) kollidiert;
(g) einen Schritt der äußeren Befestigung der Halterung (70) an den Ventilschaft (10) und Anordnen der Halterung (70), so dass die Halterung (70) dem Ventilschafthalter (30) gegenüber und in Kontakt mit dem Ventilschafthalter (30) nach dem Schritt (f) ist, wodurch die Halterung (70) an den Ventilschaft (10) befestigt wird; und
(h) einen Schritt des äußeren Anbringens des Stators (52) an die Hülse (55) und der Befestigung des Stators (52) an die Hülse (55), während der Stator (52) in der Umfangsrichtung und einer vertikalen Richtung positioniert ist.

4. Verfahren zum Montieren eines motorbetriebenen Ventils (1) nach Anspruch 3,
wobei dann, wenn das motorisch betätigte Ventil (1) vom nicht druckschließenden Typ ist, bei welchem dann, wenn der bewegliche Anschlag (34) mit dem feststehenden Anschlag (24) kollidiert, das Ventilelement (14) in einer niedrigsten Position ist und ein Spalt mit einer vorgegebenen Größe zwischen dem Ventilelement (14) und dem Ventilsitz (46) ausgebildet ist,
der Schritt (f) relatives Drehen und Absenken des Ventilschafthalters (30), der um den Schraubbetrag auf die Führungsbuchse (20) aufgeschraubt ist, in der Richtung, in der das Ventil durch einen Drehwinkel geschlossen wird, der dem Spalt der vorgegebenen Größe entspricht, der zwischen dem Ventilelement (14) und dem Ventilsitz (46) gebildet werden soll, und Bestimmen der abgesenkten Position des Ventilschafthalters (30) als eine Position, an der der Ventilschafthalter (30) in Bezug auf den Ventilschaft (10) final angeordnet sein sollte, umfasst.

5. Verfahren zum Montieren eines motorbetriebenen Ventils (1) nach Anspruch 3,
wobei dann, wenn das motorisch betätigte Ventil (1) vom druckschließenden Typ ist, wobei der Ventilschafthalter (30) auch nach dem Aufsitzen des Ventilelements (14) auf den Ventilsitz weiter abgesenkt wird, bis der bewegliche Anschlag (34) mit dem feststehenden Anschlag (24) kollidiert,
der Schritt (f) Drehen und Anheben des Ventilschafthalters (30), der um den Schraubbetrag auf die Führungsbuchse (20) aufgeschraubt ist, in der Richtung, in der das Ventil durch einen Drehwinkel geöffnet wird, der einer Differenz entspricht, die durch Subtrahieren eines Bemessungswerts einer Länge, die das Druckelement haben sollte, wenn der bewegliche Anschlag (34) mit dem festen Anschlag (24) kollidiert, von einem Bemessungswert einer Länge, die das Druckelement haben sollte, wenn das Ventilelement (14) auf dem Ventilsitz (46) aufsitzt, erzielt wird, und Bestimmen der erhöhten Position des Ventilschafthalters (30) als eine Position, in der der Ventilschafthalter (30) in Bezug auf den Ventilschaft (10) final angeordnet sein sollte, umfasst.

6. Verfahren zum Montieren eines motorbetriebenen Ventils (1) nach einem der Ansprüche 3 bis 5, wobei eine Mittelachse einer Leitungsverbindung (41), die als seitlicher Ein/Ausgang des Ventilkörpers (40) dient, oder eine verlängerte Linie der Mittelachse als die bestimmte gerade Linie verwendet wird, die durch die Drehachse des unteren Anschlaggrundkörpers (25) verläuft.

7. Verfahren zum Montieren eines motorbetriebenen Ventils (1) nach einem der Ansprüche 3 bis 6, wobei das Positionieren des Stators (52) in Bezug auf die Hülse (55) und den Ventilkörper (40) in der Umfangsrichtung und der vertikaler Richtung durch ein an einer Seite einer Unterseite des Stators (52) angebrachtes Wirbelanschlagwerkzeug (65) erfolgt, wobei das Wirbelanschlagwerkzeug (65) ein Paar bogenförmiger Halteabschnitte (65d) umfasst, die dazu eingerichtet sind, die Leitungsverbindung (41) zu halten, um als seitlicher Einlass/Auslass des Ventilkörpers (40) zu dienen.

8. Verfahren zum Montieren eines motorbetriebenen Ventils (1) nach einem der Ansprüche 3 bis 7, wobei in dem Schritt (c) ein Anschlagdrücker, der außen am unteren Anschlaggrundkörper (25) in einer relativ nicht rotierbaren Weise angebracht ist und an dem unbeweglichen Abschnitt auf der Seite des Ventilkörpers (40) befestigt ist, für den Schritt der Befestigung des unteren Anschlaggrundkörpers (25) an dem unbeweglichen Abschnitt auf der Seite des Ventilkörpers (40) genutzt wird.

## Revendications

1. Vanne actionnée par moteur (1) comprenant :
une tige de vanne (10) avec un élément de vanne (14) ;
une douille de guidage (20) dans laquelle la tige de vanne (10) est adaptée pour être insérée d'une manière relativement mobile le long de et d'une manière relativement rotative autour d'une direction d'axe (O) ;
un corps de vanne (40) ayant la douille de guidage (20) fixée de manière fixe à ce dernier et ayant un siège de vanne, l'élément de vanne (14) étant adapté pour se déplacer pour entrer en contact avec ou s'éloigner du siège de vanne (46) ;
un support de tige de vanne (30) extérieurement agencé autour de la tige de vanne (10) d'une manière relativement mobile le long de et d'une manière relativement rotative autour de la direction d'axe ;
un élément de poussée prévu entre la tige de vanne (10) et le support de tige de vanne (30) afin de pousser l'élément de vanne (14) dans une direction pour fermer la vanne ;
une garniture (70) extérieurement montée sur et fixée à la tige de vanne (10) et agencée à l'opposé et en contact avec le support de tige de vanne (30) afin de coupler de manière sensiblement fixe la tige de vanne (10) et le support de tige de vanne (30) ensemble en coopération avec l'élément de poussée ;
une boîte (55) hermétiquement assemblée au corps de vanne (40) ;
un moteur pas à pas (50) ayant un rotor (51) et un stator (52) pour faire tourner le support de tige de vanne (30) par rapport à la douille de guidage, le rotor (51) étant agencé sur un côté interne de la boîte (55) et fixé sur le support de tige de vanne, le stator (52) étant extérieurement monté sur et fixé à la boîte (55) ;
un mécanisme d'alimentation en fil (28) comprenant une partie filetée fixe (23) et une partie filetée mobile (33) pour lever ou abaisser l'élément de vanne (14) par rapport au siège de vanne (46), la partie filetée fixe (23) étant formée sur la douille de guidage (20), la partie filetée mobile (33) étant formée sur le support de tige de vanne (30) ; et
un mécanisme de butée (29) comprenant une butée fixe (24) et une butée mobile (34) pour réguler l'abaissement en rotation du support de tige de vanne (30), la butée fixe (24) étant prévue sur un corps de base de butée inférieur (25) ayant une partie filetée adaptée pour être vissée sur la partie filetée fixe (23) de la douille de guidage, la butée mobile (34) étant prévue sur le support de tige de vanne (30),
dans laquelle :
le rotor (51) est fixé sur le support de tige de vanne (30) tout en étant positionné dans une direction de rotation particulière et dans une direction verticale particulière, et le stator (52) est extérieurement monté sur et fixé à la boîte (55) et au corps de vanne (40) tout en étant positionné dans une direction circonférentielle particulière et la direction verticale particulière,
un pôle magnétique prédéterminé du rotor (51) et un plan de contact de collision (Jb) de la butée mobile (34) par rapport à la butée fixe (24) sont positionnés sur une ligne droite passant par un axe de rotation du rotor (51), et un plan de contact de collision de la butée fixe (24) par rapport à la butée mobile (34) et un pôle magnétique d'excitation prédéterminé du stator (52) sont positionnés sur une ligne droite particulière passant par l'axe de rotation ou sur une ligne droite qui est à un intervalle angulaire prédéterminé de la ligne droite particulière, et
les plans de contact de collision (Ja, Jb) de la butée mobile (34) et de la butée fixe (24) lorsque la butée mobile (34) entre en collision avec la butée fixe (24), ne coïncident pas avec une position de départ de filetage de la douille de guidage (20), comme observé sur une vue de dessus,
comprenant en outre :
un élément conducteur (62) partiellement encastré dans un moule en résine (52d) sur un côté d'un côté de face inférieure du stator (52), l'élément conducteur (62) étant adapté pour raccorder électriquement une culasse du stator (52) et le corps de vanne (40) ; et
un outil d'arrêt de tourbillon (65) fixé, de manière fixe, sur le stator (52) via l'élément conducteur (62), l'outil d'arrêt de tourbillon (65) ayant une paire de parties de support arquées (65d) adaptées pour maintenir un joint de conduit (41) pour servir d'entrée/sortie latérale du corps de vanne (40),
**caractérisée en ce que** :
la vanne actionnée par moteur (1) comprend en outre une pluralité de parties de socle (63) radialement agencées à intervalles angulaires égaux sur le côté de face inférieure du stator (52), l'une quelconque des parties de socle (63) étant adaptée pour avoir l'outil d'arrêt de tourbillon (65) fixé, de manière fixe, à cette dernière, dans laquelle l'outil d'arrêt de tourbillon (65) est formé par estampage ou similaire, à l'aide d'une plaque en métal conducteur, et comprend une partie en forme de plaque plate rectangulaire (65a) et une paire de pièces de support élastiques en forme de plaque ondulée (65b) s'étendant vers le bas à partir des côtés périphériques internes droit et gauche de la partie en forme de plaque plate (65a) et ayant des parties de support arquées (65d) adaptées pour maintenir élastiquement le premier joint de conduit (41), et l'élément conducteur (62), qui est adapté pour empêcher la génération de décharge électrique indésirée entre les culasses (52u, 52v) et la came, est formé selon la forme d'un cylindre avec une partie à bride, a une extrémité inférieure en saillie vers le bas et est inséré par un trou débouchant (65e) de l'outil d'arrêt de tourbillon (65) et y est fixé par emboutissage ou similaire,
dans laquelle les parties de socle (63) sont radialement agencées dans quatre positions du moule en résine (52d) qui sont à intervalles angulaires de 90° comprenant la partie où l'élément conducteur (62) est agencé, et une saillie de positionnement (66) adaptée pour être insérée dans le trou débouchant (65f) de l'outil d'arrêt de tourbillon (65) est prévue d'une manière saillante au niveau de chaque partie de socle (63).

2. Vanne actionnée par moteur (1) selon la revendication 1, comprenant en outre un presseur de butée (48) extérieurement fixé au corps de base de butée inférieur (25) d'une manière relativement non rotative et fixé à une partie immobile sur un côté du corps de vanne (40) .

3. Procédé pour assembler une vanne actionnée par moteur (1) selon l'une quelconque des revendications 1, 2, le procédé comprenant :
(a) une étape consistant à fixer la douille de guidage (20) sur le corps de vanne (40) sans positionner la douille de guidage (20) dans une direction circonférentielle déterminée ;
(b) une étape consistant à visser le corps de base de butée inférieur (25) sur la douille de guidage (20), et faire tourner le corps de base de butée inférieur (25) afin d'ajuster une position d'un plan de contact de collision (Ja) de la butée fixe (24) par rapport à la butée mobile (34) de sorte que le plan de contact de butée (Ja) est positionné sur une ligne droite particulière passant par un axe de rotation (O) du rotor (51) ou sur une ligne droite qui est à un intervalle angulaire prédéterminé de la ligne droite particulière, comme observé sur une vue de dessus ;
(c) une étape consistant à fixer le corps de base de butée inférieur (25) avec la position ajustée à l'étape (b) sur une partie immobile sur un côté du corps de vanne (40) ;
(d) une étape consistant à positionner le rotor (51) par rapport au support de tige de vanne (30) et fixer le support de tige de vanne (30) ayant l'élément de poussée et le rotor (51) fixé à ce dernier, sur la tige de vanne (10) sans la garniture (70) fixée à cette dernière, obtenant ainsi un ensemble ;
(e) une étape consistant à visser le support de tige de vanne (30) de l'ensemble obtenu à l'étape (d) sur la douille de guidage (20) pour permettre à l'élément de vanne (14) d'être installé sur le siège de vanne (46), et de continuer à faire tourner le support de tige de vanne (30) dans la direction pour fermer la vanne afin de permettre à la butée mobile (34) d'entrer en collision avec la butée fixe (24) ;
(f) une étape consistant à faire tourner le support de tige de vanne (30) dans la direction pour fermer la vanne ou une direction pour ouvrir la vanne selon une quantité prédéterminée sur la base d'une quantité de vis du support de tige de vanne (30) par rapport à la douille de guidage (20) lorsque la butée mobile (34) est entrée en collision avec la butée fixe (24) à l'étape (e),
déplaçant ainsi le support de tige de vanne (30) dans une position dans laquelle le support de tige de vanne (30) doit être finalement positionné par rapport à la tige de vanne (10) lorsque la butée mobile (34) entre en collision avec la butée fixe (24) ;
(g) une étape consistant à monter extérieurement la garniture (70) sur la tige de vanne (10) et agencer la garniture (70) afin d'être opposée à et en contact avec le support de tige de vanne (30) après l'étape (f), fixant ainsi la garniture (70) sur la tige de vanne (10) ; et
(h) une étape consistant à monter extérieurement le stator (52) sur la boîte (55) et fixer le stator (52) sur la boîte (55) alors que le stator (52) est positionné dans la direction circonférentielle et dans une direction verticale.

4. Procédé pour assembler une vanne actionnée par moteur (1) selon la revendication 3, dans lequel pourvu que la vanne actionnée par moteur (1) soit du type non fermé dans lequel lorsque la butée mobile (34) entre en collision avec la butée fixe (24), l'élément de vanne (14) est dans une position la plus basse et qu'un espace d'une taille prédéterminée est formé entre l'élément de vanne (14) et le siège de vanne (46),
l'étape (f) comprend les étapes consistant à faire tourner relativement et à abaisser le support de tige de vanne (30) qui a été vissé sur la douille de guidage (20) selon la quantité de vis, dans la direction pour fermer la vanne selon un angle de rotation correspondant à l'espace de la taille prédéterminée qui doit être formé entre l'élément de vanne (14) et le siège de vanne (46) et déterminer la position abaissée du support de tige de vanne (30) en tant que position dans laquelle le support de tige de vanne (30) doit être finalement positionné par rapport à la tige de vanne (10).

5. Procédé pour assembler une vanne actionnée par moteur (1) selon la revendication 3, dans lequel pourvu que la vanne actionnée par moteur (1) soit d'un type fermé par pression dans lequel même après que l'élément de vanne (14) a été installé sur le siège de vanne, le support de tige de vanne (30) continue à être abaissé jusqu'à ce que la butée mobile (34) entre en collision avec la butée fixe (24),
l'étape (f) comprend les étapes consistant à faire tourner et à laver le support de tige de vanne (30) qui a été vissé sur la douille de guidage (20) selon la quantité de vis, dans la direction pour ouvrir la vanne selon un angle de rotation correspondant à une quantité de différence qui est obtenue en soustrayant une valeur de conception d'une longueur que l'élément de poussée doit avoir lorsque la butée mobile (34) entre en collision avec la butée fixe (24) d'une valeur de conception d'une longueur que l'élément de poussée doit avoir lorsque l'élément de vanne (14) est installé sur le siège de vanne (46), et déterminer la position levée du support de tige de vanne (30) en tant que position dans laquelle le support de tige de vanne (30) doit être finalement positionné par rapport à la tige de vanne (10).

6. Procédé pour assembler une vanne actionnée par moteur (1) selon l'une quelconque des revendications 3 à 5, dans lequel une ligne centrale d'un joint de conduit (41) destiné à servir d'entrée/sortie latérale du corps de vanne (40) ou une ligne étendue de la ligne centrale est utilisée en tant que ligne droite particulière passant par l'axe de rotation du corps de base de butée inférieur (25).

7. Procédé pour assembler une vanne actionnée par moteur (1) selon l'une quelconque des revendications 3 à 6, dans lequel le positionnement du stator (52) par rapport à la boîte (55) et au corps de vanne (40) dans la direction circonférentielle et la direction verticale est réalisé en utilisant un outil d'arrêt de tourbillon (65) fixé sur un côté d'un côté de face inférieure du stator (52), l'outil d'arrêt de tourbillon (65) ayant une paire de parties de support arquées (65d) adaptées pour maintenir le joint de conduit (41) pour servir d'entrée/sortie latérale du corps de vanne (40),

8. Procédé pour assembler une vanne actionnée par moteur (1) selon l'une quelconque des revendications 3 à 7, dans lequel à l'étape (c), un presseur de butée extérieurement fixé sur le corps de base de butée inférieur (25) d'une manière relativement non rotative et fixé sur la partie immobile sur le côté du corps de vanne (40) est utilisé pour l'étape consistant à fixer le corps de base de butée inférieur (25) sur la partie immobile sur le côté du corps de vanne (40),
